(19)

Europäisches
Patentamt
European
Patent Office
Office européen
des brevets

(11) **EP 2 604 220 A1**

(12) **EUROPEAN PATENT APPLICATION**
published in accordance with Art. 153(4) EPC

(43) Date of publication:
**19.06.2013 Bulletin 2013/25**

(21) Application number: **11816218.9**

(22) Date of filing: **27.07.2011**

(51) Int Cl.:
**A61C 19/045** (2006.01)   **A61C 7/00** (2006.01)
**A61C 11/00** (2006.01)

(86) International application number:
**PCT/JP2011/004252**

(87) International publication number:
**WO 2012/020548 (16.02.2012 Gazette 2012/07)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.03.2011   JP 2011060242
10.08.2010   JP 2010179639**

(71) Applicant: **Ito, Hidefumi
Tokyo 154-0021 (JP)**

(72) Inventor: **Ito, Hidefumi
Tokyo 154-0021 (JP)**

(74) Representative: **Imbert de Tremiolles, Ghislain
Santarelli
14, avenue de la Grande Armée
B.P. 237
75822 Paris Cedex 17 (FR)**

(54) **INFORMATION PROCESSING DEVICE, INFORMATION PROCESSING METHOD AND PROGRAM**

(57)   The mandibular movement of a patient is reproduced on a computer. Three-dimensional models representing the maxillary and mandibular of the patient are acquired. An excursive movement between the acquired three-dimensional model representing the maxillary and the acquired three-dimensional model representing the mandibular is derived. An excursive movement posterior to the intercuspal position is derived.

F I G. 9

EP 2 604 220 A1

**Description**

TECHNICAL FIELD

The present invention relates to a technique for simulating the mandibular movement of a patient and, more particularly, to a technique as a diagnostic apparatus pertaining to a generally schemed apparatus, method, and program.

BACKGROUND ART

There has conventionally been a system which decides an orthodontic treatment plan using a computer system when correcting the dentition of a patient. For example, according to a technique described in PLT1, a dentition after orthodontics can be predicted using three-dimensional images of the dentition of a patient. More specifically, teeth can be translated by various methods in three-dimensional images of the dentition. The system has a program which allows a dentist to decide an orthodontic treatment plan based on a predicted dentition.

A technique for deciding an orthodontic plan by paying attention not only to the dentition but also to the occlusion. For example, according to a technique disclosed in PLT2, the occlusion is implemented using the function of a Twin Hoby articulator (another virtual articulator is also available) in a computer system. A virtual articulator for each individual can therefore be reproduced using three-dimensional images of the dentition of the patient. It can be determined whether the dentitions of a patient occlude appropriately.

CITATION LIST

PATENT LITERATURE

PLT1: Japanese Patent Laid-Open No. 2010-506692
PLT2: Japanese Patent Laid-Open No. 2007-37687

SUMMARY OF INVENTION

TECHNICAL PROBLEM

Malocclusion of teeth leads to a disease such as temporomandibular dysfunction. To prevent this, the dental arches and alignments of all teeth are preferably modified to obtain an ideal occlusion as in the invention disclosed in PLT2, in addition to modifying only the tooth alignment to straighten teeth as in the invention disclosed in PLT1. The invention disclosed in PLT2 implements the function of a Twin Hoby articulator by using a computer system. However, the mandibular movement of a patient is complicated and cannot be completely reproduced by the Twin Hoby articulator.

The present invention has an object of reproducing the mandibular movement of a patient on a computer.

SOLUTION TO PROBLEM

To achieve the object of the present invention, an information processing apparatus according to the present invention comprises the following arrangement. That is, an information processing apparatus is characterized by comprising

acquisition means for acquiring three-dimensional models representing a maxillary and mandibular of a patient, and derivation means for deriving an excursive movement between the three-dimensional model representing the maxillary that is acquired by the acquisition means, and the three-dimensional model representing the mandibular that is acquired by the acquisition means,

wherein the derivation means derives the excursive movement posterior to an intercuspal position.

ADVANTAGEOUS EFFECTS OF INVENTION

The mandibular movement of a patient can be reproduced on a computer.

Other features and advantages of the present invention will be apparent from the following descriptions taken in conjunction with the accompanying drawings, in which like reference characters designate the same or similar parts throughout the figures thereof.

BRIEF DESCRIPTION OF DRAWINGS

The accompanying drawings, which are incorporated in and constitute a part of the specification, illustrate embodiments of the invention and, together with the description, serve to explain the principles of the invention.

Fig. 1A is a block diagram exemplifying the arrangement of an information processing apparatus according to the first embodiment;
Fig. 1B is a block diagram exemplifying the arrangement of an information processing apparatus according to the second embodiment;
Fig. 2 is a flowchart exemplifying processing to be performed by the information processing apparatus according to the first embodiment;
Fig. 3 is a block diagram exemplifying the arrangement of a computer according to the third embodiment;
Fig. 4 is a view for explaining ITH theoretical mandibular movement formulae;
Fig. 5 is a graph showing the intersection of the axis plane and another plane;
Fig. 6 is a graph showing the intersection of the axis plane and another plane when viewed from the Y-axis;
Fig. 7 is a graph showing displacements of the gutter shape and condyle when viewed from the sagittal plane;
Fig. 8 is a view showing splint guidance of teeth;
Fig. 9 is a view showing a generally schemed diagnosis process;
Fig. 10 is a view showing the definition of multidimensions;
Fig. 11 is a graph showing the intersection of the axis plane and another plane; and
Fig. 12 is a graph showing displacements of the condyle and gutter when viewed from the sagittal plane.

DESCRIPTION OF EMBODIMENTS

Preferred embodiments of the present invention will now be described with reference to the accompanying drawings. However, the scope of the present invention is not limited to the following embodiments.

First Embodiment

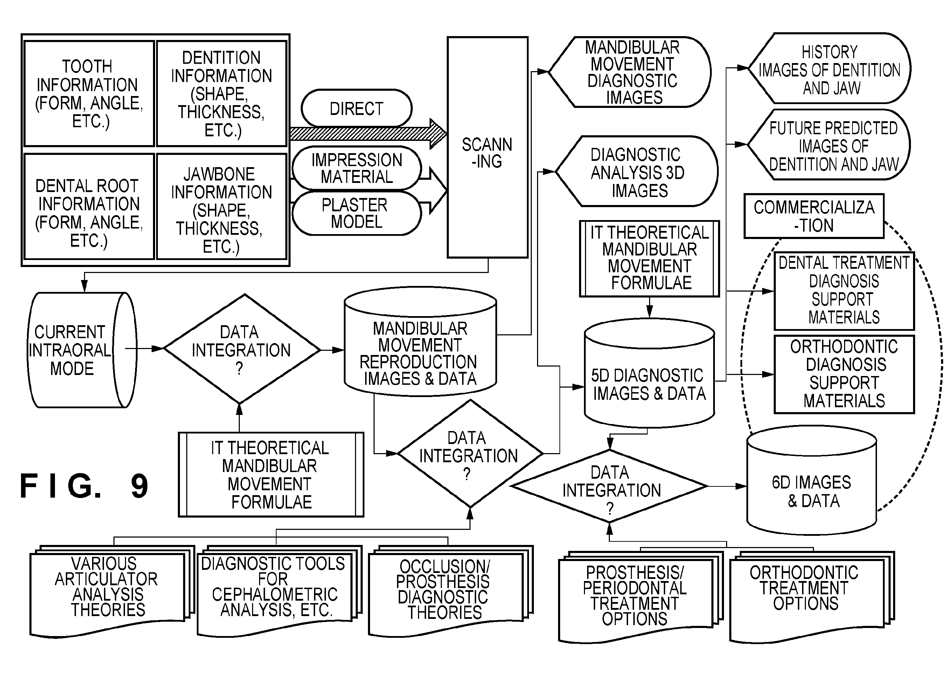

An information processing apparatus according to the first embodiment of the present invention will be described below. The embodiment can reproduce a mandibular movement on the information processing apparatus. The information processing apparatus according to the embodiment can be a CAD/CAM system having the function of a virtual articulator. Conventional techniques have already proposed virtual articulators which reproduce the articulator function on an information processing apparatus. However, the articulator function can reproduce limited mandibular movements of a patient. For this reason, conventional virtual articulators can neither reproduce the mandibular movement of a patient at high precision nor utilize it as a diagnostic material. Sufficient diagnostic materials in dentistry cannot be obtained by reproducing an occlusion state using an existing virtual articulator (CAD/CAM).
Manufacturers manufacture virtual articulators by using various occlusal planes. Current virtual articulators are used to register a check bite, Gothic arch, and pantograph (for example, axiograph) by using physical simulations while converting each personal information into 2D and 3D by scanning, CT, and the like, determine the condylar path angle and incisal guide angle, and perform prosthetics, orthodontics, and formation of dentures and the like. In ITH theoretical mandibular movement formulae described below, schemed theoretical Bennett movement formulae defined in claims, angles on various occlusal planes, and the like are listed in tables. Condylar path angles, incisal guide angles, gutter angles, and Bennett angles on various occlusal planes are set. When the protrusive translation of posterior teeth in an excursive movement was reproduced using reference values in reproduction of molars, which is condition 1 of Takayama's theoretical mandibular movement formulae, a temporomandibular dysfunction was caused. Considering this, it has been assumed that reproduction of a retrusive movement is important, completing ITH theoretical mandibular movement formulae described below. Further, theoretical formulae have been derived from the reproduction process of the temporomandibular dysfunction. By comparing personal information and evidence serving as an average diagnosis, all these theoretical formulae can reproduce maxillofacial movements. Takayama's theoretical formulae are expressed as numerical values from an occlusal plane by using the axis plane as a reference. The protrusive reference point is also a numerical value taken into the theoretical formulae. A protrusive reference point when the axis plane is set to 70 mm at the golden section ratio is set to 43 mm. The anterior facial height, that is, vertical dimension, changes for each individual. Thus, if the vertical dimension is measured to be 80 mm, the anterior height can be calculated. That is, converting personal information into 2D and 3D can reproduce a personal virtual articulator. This can be similarly regarded as a generally schemed diagnosis process to determine the result and decide a treatment plan by determining outlooks in the past, present, and future by comparison with the average values of the theoretical formulae described below. Fig. 9 shows this process.

In dental diagnosis using a conventional articulator, it is necessary to fabricate teeth or dentures with esthetics as a very high priority and provide them to a patient. In particular, prostheses formed using a material not covered by health insurance need to be esthetic. Such teeth or dentures require adjustment by a dental technician; for example, trial and error by remounting. However, when mounting teeth or dentures in an oral cavity, a dentist always has to adjust them in the oral cavity. In contrast, teeth or dentures fabricated according to the embodiment can be accurately mounted in an oral cavity. This is because the information processing apparatus according to the embodiment can reproduce six-degrees-of-freedom triaxial maxillary and mandibular movements of a patient at high precision, and can reproduce a mandibular movement by taking account of the forms of respective teeth. By standardizing the numerical values of anterior teeth in condition 2, esthetic and functional elements are also included. Since jaw correction is performed at this time, final esthetics can be ascertained after completion of dynamically retained correction though there is a limitation. Further, artificial teeth coping with all materials necessary for dentures can be manufactured, and the form of a crown matching an individual can also be manufactured. Although the term "esthetic", which is a generally accepted notion, is used here and means improving something ugly, the term "cosmetic", meaning becoming beautiful and good-looking should actually be used.

In short,

1. There is no true diagnostic criterion in dental treatment anywhere in the world.
2. The CAD/CAM equipment, which is the quintessence of the comprehensive treatment means, is lack of an information transmission software gene.
3. Examining what evidence-based dentistry (true diagnosis) and an algorithm (harmony with personal information) are selected, thereby building a culmination and basis in the medical field.
4. It is important to exploit personal information, but the personal information could be recognized as CAD which should originally be true. The present inventor has predicted future prospects at the stage of permanent teeth for 20-odd years.
5. The present invention provides a worldwide methodology that benefits results from decision making and diagnosis treatment so that a dentist may make an accurate decision by using scientific, generally schemed theoretical formulae "ITH theoretical mandibular movement formulae".

The information processing apparatus according to the embodiment can especially reproduce a mandibular movement by using a mandibular movement program. For example, the information processing apparatus according to the embodiment can be a CAD in which the mandibular movement program is installed. The present inventor has developed the mandibular movement program according to the embodiment based on the results of analyzing clinical performances collected for 20-odd years. The mandibular movement program according to the embodiment can be expressed in the form of theoretical formulae (equations). These theoretical formulae (ITH theoretical mandibular movement formulae) are built by reevaluating Takayama's theoretical mandibular movement formulae (Hobo S, Takayama H: Oral Rehabilitation clinical determination of Occlusion, 1997, Quitessence Publishing Co., Inc., and Science of Occlusion, Quitessence Publishing Co., Inc., 1995). The ITH theoretical mandibular movement formulae theoretically represent a retrusive mandibular movement and the process of manifestation of a temporomandibular dysfunction.

More specifically, the present inventor has found errors in Takayama's theoretical mandibular movement formulae, and also discovered theoretical formulae in the retrusive movement segment. Modifications and modified theoretical formulae will be presented below. (1) In Table 11, there is no arithmetic equation for reproducing the projection angle and actual angle of a horizontal lateral incisal guide angle in the theoretical formula of the lateral wing angle of a gutter adjustable incisal guide. (2) In Table 12, substitution of the protrusive condylar path angle (wrong: $\Omega_{il} \rightarrow$ correct: $\Omega_{cp}$) and the intercondylar distance (wrong: $Lc \rightarrow$ correct: $1/2Lc$) in the hinge rotation angle arithmetic equations may be erroneous. (3) In Table 13, the hinge rotation angle (wrong: $\Theta_{tmp} \rightarrow$ correct: $\Theta_{thp}$) in the cusp inclination arithmetic equations was found to be erroneously substituted into an equation. (4) In Table 17, the condylar path angle (wrong: $\Omega_{cp} \rightarrow$ correct: $\Omega_{cl}$) in the arithmetic equation of the hinge rotation angle of the maxillary frame of an articulator guided by the incisal guide of a gutter table was found to be erroneously substituted into an equation.

Clinical performance results collected for past 20 years have worked well because the results of calculating the dimensions of articulators and the average value of condylar necks by Takayama based on an enormous amount of materials and figures before deriving calculation formulae were correct. A draft of the ITH multidimensional concept theoretical formulae has solved problems by using figures in the process of manifestation of a temporomandibular dysfunction by Takayama. In addition, the analysis of a retrusive movement by a Twin-Hoby articulator has revealed that a so-called premature contact portion is important for a retrusive movement. It was inferred that a retrusive movement was held at some portion other than the condylar path, like a screen. From this, it has been found that the factor of the retrusive movement arises from posterior teeth. As a result, evidence-based dentistry by the multidimensional concept has been established. Here, the validity of the ITH theoretical mandibular movement formulae and the feasibility of a virtual articulator will be described. By measuring numerical values as evaluation points of each individual, a so-called virtual articulator for him can also be reproduced and compared with an average evaluation. In addition, the multidimensional concept can be implemented under data management.

A mandibular movement program used as an example in the embodiment can reproduce an average mandibular movement which enables the most comfortable occlusion for an individual in accordance with parameters specific to him, such as his face size and his jaw shape and length. The mandibular movement program can provide a dentist with information which allows him to compare the reproduced average mandibular movement with the patient and diagnose the state of the patient without actually correcting his tooth shape and jaw. In other words, this mandibular movement program can support comprehensive diagnosis of a patient. The information processing apparatus according to the embodiment can provide four-dimensional diagnostic materials including the spatial axis and temporal axis. That is, the information processing apparatus according to the embodiment can provide three-dimensional images of the jaw of a patient and in addition, reproduce and provide six-degrees-of-freedom triaxial maxillary and mandibular movements along the temporal axis. For example, in "Clinical Evidence and Prosthodontics" (Journal of Prosthetic Dentistry, Vol. 46, p. 476, 2002), Takayoshi Kawazoe describes the relationship between an average mandibular movement, clinical evidence, and a comfortable occlusion: "Making a safe and proper clinical diagnosis for each individual patient using clinical evidence (average data) as appropriate as possible requires not only average clinical evidence, but also profound philosophy and experience of a doctor and a high-level medical decision integrating even medical resources and care for patient's preferences and the like.

The embodiment can reproduce a six-degrees-of-freedom triaxial jaw joint movement. The embodiment can also reproduce the tooth cusp angle, the state of the cusp slope, and a change of the contact state. According to the embodiment, the mandibular movement of a human body (even an individual) can be reproduced in a PC. (An existing technique reproduces, in a PC, the movement of an articulator which reproduces a mandibular movement outside a patient, and the movement of the articulator itself has a limitation in reproduction.) The ITH theoretical mandibular movement formulae have been discovered, which will be described later. These features can be implemented because the ITH theoretical mandibular movement formulae have been completed and a technique of virtually reproducing maxillary and mandibular dentitions is applied. According to the embodiment, a dentist can receive diagnostic materials by adding mandibular movements based on the occlusion theory, diagnosis theory, and the like in addition to reproduction of the mandibular movement of a human body in a PC. (Conventionally, a technique and knowledge for making a diagnosis using an articulator are requested of a technician.)

The ITH theoretical mandibular movement formulae can accurately create the shape of the cusp inclined plane of each tooth by deriving dimension values described by a three-dimensional CT or the like. It can also be determined whether an artificial tooth available from each tooth manufacturer is a standard. The ITH theoretical mandibular movement formulae also have a feature capable of carefully examining a difference of the artificial tooth.

Although the information processing apparatus according to the embodiment will be explained, a usable information processing apparatus is not limited to the following one. For example, features to be described below, including reproduction of the six-degrees-of-freedom triaxial maxillary and mandibular movements of a patient at higher precision and the use of the mandibular movement program (CAD) according to the embodiment, may be applied in accordance with the movable characteristics of an existing virtual articulator. The information processing apparatus according to the embodiment can be interlocked with all virtual articulators based on calculations using the axis plane as a reference.

The above-described system which converts a six-degrees-of-freedom triaxial mandibular movement into numerical values and performs simulations up to four dimensions can be integrated with a system which can build the shapes of the slopes of upper and lower teeth and a difference and change of the contact state by reproducing the cusp angles of teeth. For example, this system can be integrated with one of physical simulation systems available from Autodesk (Softimage), 3Shape, KaVo Dental Systmes, CEREC, Procera, Cercon, Angel Crown, In-Ceram, Wol-Ceram, Everest, Image Instruments, and other Japanese manufacturers. The information processing apparatus according to the embodiment may be, for example, a server and can be connected to a client apparatus via a communication line. In this case, the client apparatus can transmit, to the information processing apparatus according to the embodiment, images obtained from MRA, MAI, CT, and scanned visual images and the like. The information processing apparatus according to the embodiment can perform processing (to be described later) by using images transmitted from the client apparatus, and transmit the processing results to it.

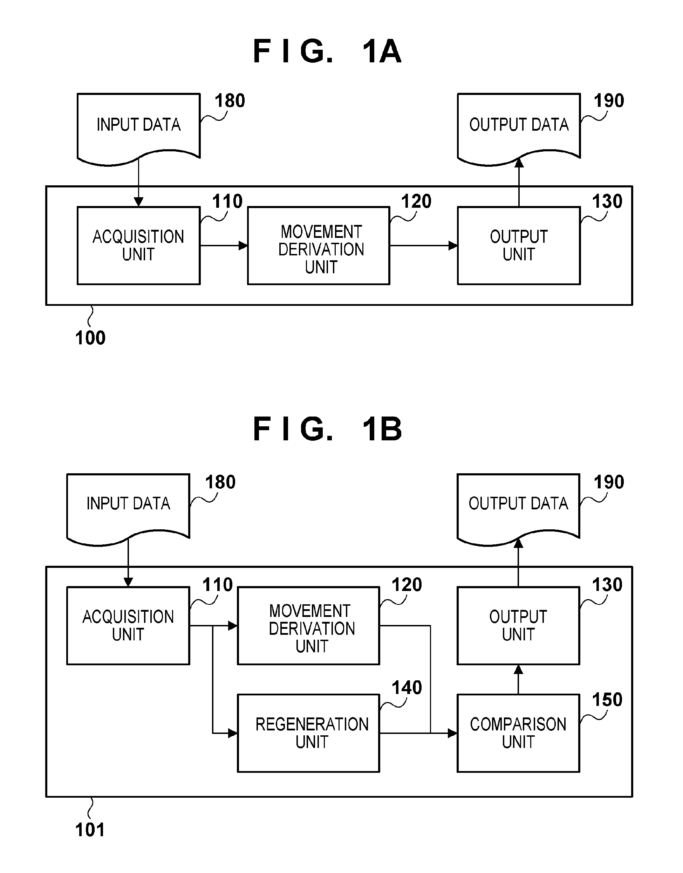

An information processing apparatus 100 according to the embodiment will be explained in detail with reference to Fig. 1A. The information processing apparatus 100 according to the embodiment includes an acquisition unit 110, movement derivation unit 120, and output unit 130.

The acquisition unit 110 acquires input data 180 representing the maxillary model and mandibular model of patient X, respectively. The input data 180 can be three-dimensional data. For the three-dimensional data acquisition method, various methods are usable. For example, the information processing apparatus according to the embodiment may include an imaging means (not shown). By imaging the maxillary and mandibular of a patient by the imaging means, the acquisition unit 110 can acquire three-dimensional data representing the maxillary model and mandibular model, respectively.

The imaging means may be able to directly capture three-dimensional images. For example, C.O.S (Chair-side Oral Scanner) available from 3M ESPE is usable. Similar products are also available from other manufacturers such as DICO, 3D Systems Japan, Nikon, Konica Minolta, Image Instruments, and Exocad. Three-dimensional photographs of the face are also important, and software available from Image Instruments can also be used. The imaging means may capture two-dimensional images. In this case, the two-dimensional images captured by the imaging means are converted into three-dimensional data by a well-known method. This conversion may be performed by the conversion means (not shown) of the information processing apparatus according to the embodiment. This conversion may also be performed by a conversion apparatus independent of the information processing apparatus according to the embodiment. As the two-dimensional images, an X-ray image, cephalogram, dental CT, dentition panoramic image, and optical scan image (for which an apparatus (apparatus available from 3Shape) currently having 14-$\mu$m precision is available) are usable. However, the two-dimensional images are not limited to them. The two-dimensional images suffice to be ones which can be converted into three-dimensional data representing the maxillary model and mandibular model, respectively.

The acquisition unit 110 may acquire the above-mentioned two-dimensional data or three-dimensional data from the outside. For example, the user may input the two-dimensional data or three-dimensional data into the acquisition unit 110. The acquisition unit 110 may receive and acquire the two-dimensional data or three-dimensional data from an independent apparatus. For example, the acquisition unit 110 may receive the two-dimensional data or three-dimensional data from a remote apparatus via a communication line. The remote apparatus may be an imaging device or a computer installed in a dental clinic.

The maxillary model and mandibular model acquired by the acquisition unit 110 may be represented by parameters. The parameters may represent the structure of at least either of the maxillary and mandibular of patient X. Parameters used in Hobo S, Takayama H: Oral Rehabilitation clinical determination of Occlusion, 1997. Quintessence Publishing Co., Inc. can be used for these parameters. The acquisition unit 110 may calculate the parameters from the above-mentioned two-dimensional data or three-dimensional data.

The movement derivation unit 120 derives an excursive movement between the maxillary model and the mandibular model by using three-dimensional data which have been acquired by the acquisition unit 110 and represent the maxillary model and mandibular model. In the embodiment, the excursive movement derived by the movement derivation unit 120 may be an excursive movement complying with a reference cusp angle. Electronic measurement and kinetic analysis have revealed that molar disclusion arises from three factors, that is, condylar path, incisal path, and cusp angle. It has been known that the cusp angle hardly differs between individuals. Hence, an excursive movement complying with a reference cusp angle is a reference (ideal) excursive movement which hardly differs between individuals. When the maxillary and mandibular occlude appropriately, it is considered that they correctly contact each other in the derived excursive movement. The derived excursive movement can therefore serve as useful diagnostic information for a dentist. The excursive movement is a general term of protrusive, lateral, and retrusive movements of the condylar neck, especially the mandibular dental arch with respect to the maxillary bone. The excursive movement includes a retrusive, lateral, or protrusive movement from the intercuspal position, and particularly includes a protrusive sliding movement and lateral sliding movement. The intercuspal position is a position when upper and lower teeth occlude with a maximum contact area. Lateral movements are classified into a working side movement and nonworking side movement. The working side movement and nonworking side movement are also expressed as similar movements for each upper tooth and each lower tooth in a narrow sense. An occlusal position displaced posteriorly, laterally, or anteriorly from the intercuspal position, which is used for the jaw function, is called an exclusive occlusal position. Anatomically, the inclination of a cusp slope from the cusp tip to the fissure or the buccolingal marginal ridge is called a cusp inclination. An angle formed by the cusp inclination and a plane perpendicular to the major axis of the tooth is called a cusp angle. The reason why the cusp angle is used is that three elements, that is, condylar path, incisal path, and cusp angle have been discovered, as published, in order to reproduce a molar disclusion amount, which led to Takayama's theoretical formulae. Of these elements, the cusp angle hardly varies, and its reliability is four times higher than that of the condylar path which fluctuates or the incisal path which varies. The cusp angle is regarded as the development angle of the tooth. The forms of the condylar path, anterior teeth, and molars can be reproduced from the theoretical mandibular movement formulae. By separately reproducing anterior teeth and molars, the molar disclusion amount can also be reproduced. Since the functions of the incisal guide and gutter table can be reproduced, the angular forms (cusp angle and incisal guide angle) of teeth can be reproduced. This has been proved in Color Atlas of Occlusion and an English book about clinical findings in vivo and in vitro.

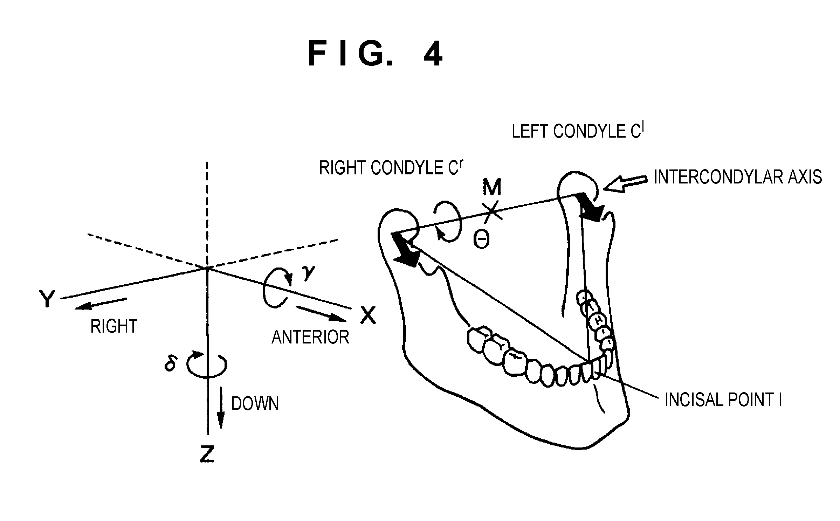

As a method for deriving an excursive movement, the embodiment adopts the following theoretical formulae (1). Needless to say, an excursive movement may be derived using another method such as registration of a mandibular movement based on the axiograph, a check bite method, or a gothic arch method. In this specification, the following theoretical formulae (1) will be called ITH theoretical mandibular movement formulae. By using the ITH theoretical mandibular movement formulae, a six-degrees-of-freedom triaxial mandibular movement can be expressed. Theoretical formulae (1) are important as conditions inevitable for development of virtual articulator software, including new theoretical formulae having the above-described contents defined in claims. As will be described below with reference to Fig. 4, the six-degrees-of-freedom triaxial mandibular movement can be expressed as translational movements along (X, Y, Z) axes and rotational movements ($\gamma$, $\delta$, $\theta$) about the origin.

The mandibular simultaneously performs these six translations, that is, rotations and sliding parallel translations, and it is difficult to analyze the translation path. However, the analysis here targets not the translation path but a displacement before and after translation. Since the displacement of an object position is not influenced by the order of movements, the six translations can be examined independently without any problem. Thus, the rotational movements → sliding parallel translations will be examined in the order named. The basic equations of the movements are as follows (A, B, and C are X, Y, and Z components before translation, and $\Delta$Ox, $\Delta$Oy, and $\Delta$Oz are X, Y, and Z components in sliding parallel translation):

[ITH Theoretical Mandibular Movement Formulae (1)]

$$\Delta X = -B \times \delta - C \times \Theta + \Delta Ox$$

$$\Delta Y = C \times \gamma + A \times \delta + \Delta Oy$$

$$\Delta Z = A \times \Theta - B \times \gamma + \Delta Oz$$

Theoretical formulae (1) are theoretical formulae representing a mandibular movement. Formulae (1) will be explained. To analyze a mandibular movement, a coordinate system fixed to the maxillary is set such that the antero-posterior direction serves as the X-axis (anterior +), the right-and-left direction serves as the Y-axis (right +), and the up-and-down direction serves as the Z-axis (down +). A displacement of an arbitrary point of the mandibular in the three-dimensional space can be represented by six translations, that is, three-dimensional sliding parallel translations and three-dimensional rotations.

Movements of the mandibular are roughly classified into a protrusive movement and lateral movement, which are classified into a total of four movements, that is, movements in the anterior segment and those in the posterior segment with respect to a so-called appropriate centric mandibular position. For the protrusive movement, the intersection point of the intercondylar axis and the median plane is set as the origin. For the lateral movement, the working side condyle center before movement is set as the origin. Note that the lateral movement includes a right lateral movement and left lateral movement. These movements are symmetrical about the median plane, so the right lateral movement will be analyzed. $\delta$(rad) is a rotation angle in the X-Y plane, $\gamma$(rad) is a rotation angle in the Y-Z plane, and $\theta$(rad) is the rotation angle of a rotation about the intercondylar axis serving as the rotation axis.

In this manner, formulae (1) use a reference coordinate system fixed to the maxillary. In this coordinate system, the antero-posterior direction serves as the X-axis, the right-and-left direction serves as the Y-axis, and the up-and-down direction serves as the Z-axis. Anterior, right, and down directions are as positive directions. The X-Y plane serves as a horizontal plane, the Y-Z plane serves as a frontal plane, and the Z-X plane serves as a sagittal plane.

One point of the mandibular is set as the origin O of the movement coordinate system, and the coordinate axes (x, y, z) of the movement coordinate system are assumed to be parallel to the coordinate axes (X, Y, Z) of the reference coordinate system. A three-dimensional displacement of the origin O after performing movements including the translational movement and rotational movement of the mandibular is represented by ($\Delta$Ox, $\Delta$Oy, $\Delta$Oz). $\delta$ is a radian expression of an angle formed by the y-axis of the movement coordinate system with the Y-axis in the X-Y plane after the mandibular movement (clockwise direction when viewed from the front is positive). Similarly, $\gamma$ is a radian expression of an angle formed by the y-axis with the Y-axis in the Y-Z plane (clockwise direction when viewed from the front is positive). Further, $\Theta$ is a radian expression of an angle at which the z-x plane rotates about the y-axis after the rotations $\delta$ and $\gamma$ (clockwise direction when viewed from the right is positive). These definitions are shown in Fig. 4.

In this case, a three-dimensional displacement of one arbitrary point on the mandibular at a position (A, B, C) in the movement coordinate system with respect to the reference coordinate system is represented by ($\Delta$X, $\Delta$Y, $\Delta$Z) using theoretical formulae (1).

The above formulae are complicated because the signs of all A, B, C, $\delta$, $\gamma$, $\Theta$, $\Delta$Ox, $\Delta$Oy, and $\Delta$Oz need to be taken into account. However, the movements of all the six translations, that is, sliding parallel translations and rotational movements including the anterior segment, posterior segment, protrusive movement, and lateral movement can be analyzed using these formulae. The formulae is the basis of formulae to be described later.

Theoretical formulae (1) yield theoretical protrusive movement formulae (1-1) representing a mandibular movement in an anterior segment (protrusive movement segment) from the centric occlusion or intercuspal position, and theoretical retrusive movement formulae (1-2) representing a mandibular movement in a posterior segment (retrusive

EP 2 604 220 A1

movement segment) from the intercuspal position. Mandibular movements in the protrusive movement segment and retrusive movement segment can be derived according to these different formulae. More specifically, an actual mandibular movement of patient X in the protrusive movement segment, that is, a state in which the mandibular dental arch translates anteriorly from the centric occlusion or intercuspal position can be derived from the maxillary model and mandibular model of patient X or parameters representing them in accordance with theoretical protrusive movement formulae (1-1) (second calculation method). Similarly, an actual mandibular movement of patient X in the retrusive movement segment, that is, a state in which the mandibular dental arch translates posteriorly from the centric occlusion or intercuspal position can be derived from the maxillary model and mandibular model of patient X or parameters representing them in accordance with theoretical retrusive movement formulae (1-2) (first calculation method).

First, theoretical protrusive movement formulae (1-1) (Takayama's theoretical movement formulae) will be explained. To simplify the calculation, A, B, and C are the absolute values of the X-, Y-, and Z-coordinates before translation, and $\delta$, $\gamma$, and $\Theta$ are the magnitudes of rotation angles. Formulae in which signs are so adjusted as to substitute positive values for all these six elements are formulae (1-1) :

[Theoretical Protrusive Movement Formulae (1-1)]

$$\Delta X = B \times \delta - C \times \Theta + \Delta Ox$$

$$\Delta Y = C \times \gamma + A \times \delta + \Delta Oy$$

$$\Delta Z = A \times \Theta + B \times \gamma + \Delta Oz$$

Theoretical protrusive movement formulae (1-1) yield formulae (1-1-1) representing a protrusive movement and formulae (1-1-2) representing a lateral movement (right and left lateral movements). In the following formulae,
$\Omega cp$: an inclination angle formed by the movement locus of the middle point of the intercondylar axis with a horizontal reference plane in the sagittal plane in the protrusive movement (average of left and right sagittal protrusive condylar path inclination angles)
Acp: an average protrusive condylar path length ($\sqrt{(\Delta Xcp, ave)^2 + (\Delta Zzp, ave)^2}$: Pythagorea)
$\Delta cl$: a lateral condylar path length ($\sqrt{\Delta Xcl^2 + \Delta Ycl^2 + \Delta Zcl^2}$)
$\Delta Xcp$, ave: the average of protrusive displacements of the left and right condyle centers (protrusive displacement of the middle point of the intercondylar axis)
$\Delta Zcp$, ave: the average of down displacements of the left and right condyle centers (down displacement of the middle point of the intercondylar axis)
$\Delta Xwl$: a protrusive displacement of the working side condyle center
$\Delta Ywl$: a lateral displacement of the working side condyle center (right is positive for a right lateral movement and left is positive for a left lateral movement)
$\Delta Zwl$: a down displacement of the working side condyle center
$\Delta Xil$: a protrusive displacement of the incisal point
$\Delta Yil$: a lateral displacement of the incisal point (right is positive for a right lateral movement and left is positive for a left lateral movement)
$\Delta Zil$: a down displacement of the incisal point
$\Omega cp = \tan^{-1}(\Delta Zcp,ave/\Delta Xcp,ave)$: an inclination angle formed by the movement locus of the middle point of the intercondylar axis with a horizontal reference plane in the sagittal plane in the protrusive movement (average of left and right sagittal protrusive condylar path inclination angles)
$\Omega cl = \tan^{-1}(\Delta Zcl/\Delta Xcl)$: an inclination angle (sagittal lateral condylar path inclination angle) formed by the nonworking side condylar path with a horizontal reference plane in the sagittal plane in the lateral movement
Be $= \tan^{-1}(\Delta Ycl/\Delta Xcl)$: an inclination angle (Bennett angle or horizontal lateral condylar path angle) formed by the nonworking side condylar path with a sagittal plane in the horizontal plane in the lateral movement
$\Omega ip = \tan^{-1}(\Delta Zip/\Delta Xip)$: an inclination angle (sagittal protrusive incisal guide inclination angle) formed by the incisal path with a horizontal reference plane in the sagittal plane in the protrusive movement
$\Omega il = \tan^{-1}(\Delta Zil/\Delta Xil)$: an inclination angle (sagittal lateral incisal guide inclination angle) formed by the incisal path with a horizontal reference plane in the sagittal plane in the lateral movement
$\Phi il = \tan^{-1}(\Delta Zil/\Delta Yil)$: an inclination angle (frontal lateral incisal guide inclination angle) formed by the incisal path with a horizontal reference plane in the frontal plane in the lateral movement

8

$\Psi il = tan^{-1}(\Delta Yil/\Delta Xil)$: an angle (horizontal lateral incisal guide angle or gothic arch angle) formed by the incisal path with a sagittal plane in the horizontal plane in the lateral movement

$\Theta hp$: a radian expression of a rotation angle about the intercondylar axis (y-axis) in the protrusive movement: $\Theta$ in the protrusive movement (protrusive hinge rotation angle)

$\Theta hl$: a radian expression of a rotation angle about the intercondylar axis (y-axis) in the lateral movement: $\Theta$ in the lateral movement (lateral hinge rotation angle)

$\delta 1$: a radian expression of the horizontal projection of a rotation angle about an axis perpendicular to a plane which passes through the working side condyle center and includes the intercondylar axis and nonworking side condylar path in the lateral movement: $\delta$ in the lateral movement (horizontal lateral rotation angle)

$\gamma l$: a radian expression of the frontal projection of a rotation angle about an axis perpendicular to a plane which passes through the working side condyle center and includes the intercondylar axis and nonworking side condylar path in the lateral movement: $\gamma$ in the lateral movement (frontal lateral rotation angle)

Lc: the distance between left and right condyle centers C and C': the length of the intercondylar axis C-C' (intercondylar distance)

(Ai, Bi, Ci): the three-dimensional coordinates of the incisal point in the movement coordinate system In the protrusive movement formulae, the intersection point M of the intercondylar axis and the median plane is set as the origin of the movement coordinate system. In the lateral movement formulae, the working side condyle center C or C' is set as the origin. These points are shown in Fig. 4.

[Protrusive Movement Formulae (1-1-1) in Protrusive Movement]

A protrusive movement in the anterior segment (theoretical protrusive movement formulae) includes a hinge rotational movement about the intercondylar axis serving as the rotation axis, and a parallel translation movement which is positive along the X- and Z-axes. The protrusive movement assumes that there is no left or right displacement, so analysis is performed on the premise of $\Delta Y = 0$. This is equivalent to $\delta = 0$, $\gamma = 0$, and $\delta Oy = 0$ in the basic formulae. When a direction in which the mouth opens is set as a positive direction, $\Theta$ is given by

$$\Delta X = -C \times \Theta hp + \Delta Ox$$

$$\Delta Y = 0$$

$$\Delta Z = A \times \Theta hp + \Delta Oz$$

Since $\Delta Ox$ and $\Delta Oz$ in sliding parallel translation are X and Y components in parallel translation of the condyle, $\Delta Ox = cos\Omega cp \times Acp$ and $\Delta Oz = sin\Omega cp \times Acp$ (Acp: condylar path length). Accordingly, the protrusive movement formulae are

$$\Delta X = cos\Omega cp \times \Lambda cp - C \times \Theta hp$$

$$\Delta Z = sin\Omega cp \times \Lambda cp + A \times \Theta hp$$

Since $tan\Omega ip = \Delta Zip/\Delta Xip$, $\Theta hp$ is given by

$$\Theta hp = ((tan\Omega ip - tan\Omega cp) \times cos\Omega cp \times \Lambda cp)/(Ci \times tan\Omega ip + Ai)$$

[Lateral Movement Formulae (1-1-2) in Protrusive Movement]

The lateral movement includes a rotational movement in the X-Y plane about the working side condyle center, a rotational movement in the Y-Z plane, the three-dimensional rotational movement of a hinge rotational movement, and a movement of three-dimensional sliding parallel translation (ΔXwl, ΔYwl, ΔZwl) of the condyle. The lateral movement is given by

$$\Delta X \;=\; B \times \delta l \;-\; C \times \Theta hl \;+\; \Delta Xwl$$

$$\Delta Y \;=\; C \times \gamma l \;+\; A \times \delta l \;+\; \Delta Ywl$$

$$\Delta Z \;=\; A \times \Theta hl \;+\; B \times \gamma l \;+\; \Delta Zwl$$

The coordinates of the working side condyle center and nonworking side condyle center are substituted into the above formulae to solve the formulae for δl and γl:

$$\delta l \;=\; (\Delta Xcl \;-\; \Delta Xwl)/Lc \;=\; (\Lambda cl \times \cos\Omega cl)/Lc$$

$$\gamma l \;=\; (\Delta Zcl \;-\; \Delta Zwl)/Lc$$

Since

$$\tan\Omega cl \;=\; \Delta Zcl/\Delta Xcl,$$

$$\gamma l \;=\; \tan\Omega cl \times \delta l \;+\; (\Delta Xwl \times \tan\Omega cl \;-\; \Delta Zwl)/Lc$$

Also, since

$$\tan\Phi il \;=\; \Delta Zil/\Delta Yil,$$

$$\Theta hl \;=\; (\delta l/Ai) \times ((Ci \times \tan\Omega cl \;+\; Ai \;+\; Lc \times \tan Be)$$
$$\times \tan\Phi il \;-\; (Lc/2) \times \tan\Omega cl)$$

In addition,

$$\Delta Ywl \;=\; (Lc \times \delta l \;+\; \Delta Xwl) \times \tan Be$$

is obtained. (ΔXwl and ΔZwl are obtained by measurement. If ΔXwl and ΔZwl cannot be measured, they are calculated as 0.)
The above formulae are approximate formulae using linear approximation, and values up to $10^{-1}$ mm can be obtained as reliable values. Second-order small terms for further increasing the precision are as follows:

$$\Delta\Delta X \;=\; -A \times ((\delta l^2 \;+\; \Theta h^2)/2) \;-\; C \times \delta|\gamma|/2$$

$$\Delta\Delta Y \;=\; B \times ((\delta l^2 \;+\; \gamma l^2)/2) \;+\; A \times \gamma|\Theta h \;-\; C \times \delta|\Theta h$$

$$\Delta\Delta Z = -C \times ((\gamma l^2 + \Theta h^2)/2) - A \times \delta|\gamma|/2$$

By adding these terms to the linear approximate formulae, values up to $10^{-3}$ mm can be obtained.

Next, theoretical retrusive movement formulae (1-2) will be explained. The theoretical mandibular movement formulae published by Takayama describe only a movement in which the mandibular translates from an appropriate centric mandibular position to the anterior segment. To the contrary, the ITH theoretical mandibular movement formulae can analyze a movement including even the posterior segment from an appropriate centric mandibular position, and can obtain the inclination angles of molars which are necessary when the mandibular translates posteriorly. Details of theoretical retrusive movement formulae (1-2) will be described below.

[Theoretical Retrusive Movement Formulae (1-2)]

$$\Delta X = -B \times \delta - C \times \Theta + \Delta Ox$$

$$\Delta Y = C \times \gamma - A \times \delta + \Delta Oy$$

$$\Delta Z = A \times \Theta + B \times \gamma + \Delta Oz$$

Theoretical retrusive movement formulae (1-2) can also yield formulae (1-2-1) representing a protrusive movement and formulae (1-2-2) representing a lateral movement (right and left lateral movements).

[Protrusive Movement Formulae (1-2-1) in Retrusive Movement]

In a protrusive movement in the posterior segment, the direction in which the mouth opens is set to be positive for a hinge rotation movement, similar to a movement in the theoretical protrusive movement formulae. However, the sliding parallel translation moves in the negative direction along the X-axis and the positive direction along the Z-axis:

$$\Delta X = -\cos\Omega cp \times \Lambda cp - C \times \Theta hp$$

$$\Delta Z = \sin\Omega cp \times \Lambda cp + A \times \Theta hp$$

$$\Theta hp = ((\tan\Omega ip - \tan\Omega cp) \times \cos\Omega cp \times \Lambda cp)/(Ai - Ci \times \tan\Omega ip)$$

[Lateral Movement Formulae (1-2-2) in Retrusive Movement]

In a protrusive movement, the rotation $\delta$ in the X-Y plane is reverse to that in a movement in the anterior segment. Therefore, the sliding parallel translation $\Delta Ywl$ parallel to the Y-axis is also considered to be opposite to that in the theoretical protrusive movement formulae. The remaining two sliding parallel translations and two rotations are the same as those in the theoretical protrusive movement formulae, so the theoretical protrusive movement formulae are changed into $\delta l \rightarrow -\delta l$ and $\Delta Ywl \rightarrow -\Delta Ywl$. As a result, the following theoretical protrusive movement formulae are obtained ($\delta l$, $\gamma l$, and second-order small terms are also obtained similarly to the anterior segment):

$$\Delta X = -B \times \delta l - C \times \Theta hl + \Delta Xwl$$

$$\Delta Y = C \times \gamma 1 - A \times \delta 1 + \Delta Yw1$$

$$\Delta Z = A \times \Theta h1 + B \times \gamma 1 + \Delta Zw1$$

$$\delta 1 = (\Delta Xc1 - \Delta Xw1)/Lc = (\Lambda c1 \times \cos\Omega c1)/Lc$$

$$\gamma 1 = \tan\Omega c1 \times \delta 1 - (\Delta Xw1 \times \tan\Omega c1 + \Delta Zw1)/Lc$$

$$\Theta h1 = (\delta 1/Ai) \times ((Ci \times \tan\Omega c1 - Ai - Lc \times$$

$$\tan Be) \times \tan\Phi i1 - (Lc/2) \times \tan\Omega c1)$$

$$\Delta Yw1 = -(Lc \times \delta 1 + \Delta Xw1) \times \tan Be$$

$$\Delta\Delta X = -A \times ((\delta 1^2 + \Theta h^2)/2) + C \times \delta|\gamma|/2$$

$$\Delta\Delta Y = B \times ((\delta 1^2 + \gamma 1^2)/2) + A \times \gamma|\Theta h - C \times \delta|\Theta h$$

$$\Delta\Delta Z = -C \times ((\gamma 1^2 + \Theta h^2)/2) + A \times \delta|\gamma|/2$$

The displacement and inclination of the first molar are calculated from the theoretical retrusive movement formulae:

$$\Delta X = -B\delta - C\Theta$$

$$\Delta Z = C\gamma - A\delta + \Delta Yw1$$

$$\Delta Z = B\gamma + A\Theta$$

$$\Theta hp = -9.244262507 \times 10^{-3}$$

$$\Delta Xmp = -1.558592329$$

$$\Delta Zmp = 1.928362829$$

$$\Omega mp = 51.05324$$

$$\Theta h1 = -0.0221825621$$

$$\Delta Xmw = 0.4052117727$$

$$\Delta Ymw = -0.3822412627$$

$$\Delta Zmw = -0.3127691477$$

$$\Delta Xmnw = -0.5589696418$$

$$\Delta Ymnw = -0.3822412627$$

$$\Delta Zmnw = 0.836297517$$

$$\Phi mw = 29.69135211$$

$$\Phi mnw = 51.00212093$$

[Calculation of Bennett Angle]

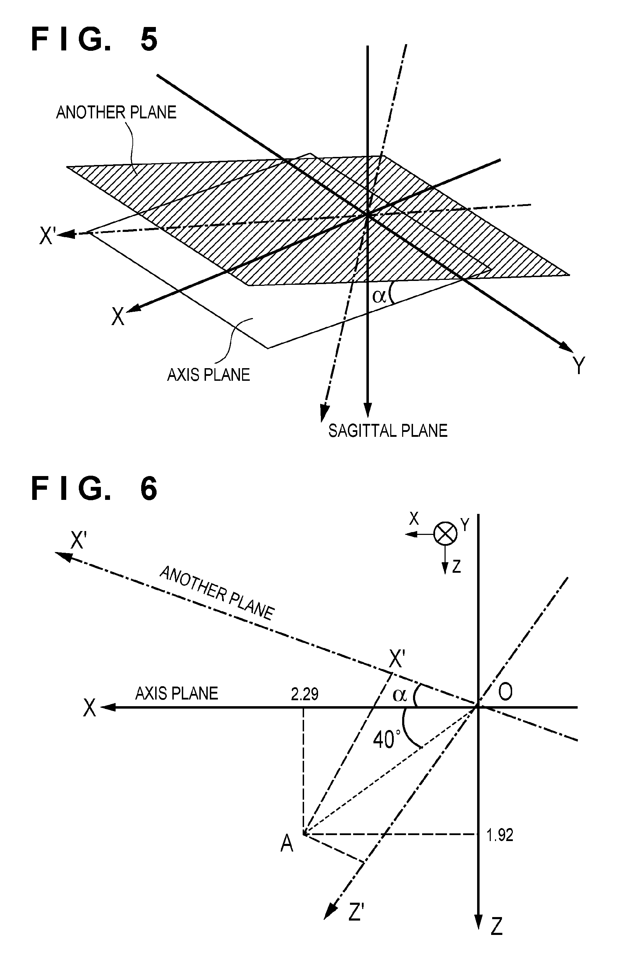

In this calculation method, a displacement of the nonworking side condyle on the axis plane is calculated first and converted into coordinates when viewed from another plane, and then the Be angle is calculated using Takayama's theoretical formulae. Figs. 5 and 6 show this calculation method. First, the coordinates of the nonworking side condyle on the axis plane serving as a reference are calculated in accordance with Takayama's theoretical formulae:

$$\Delta Xwl = Lc \times \delta l$$

$$\Delta Ywl = \Delta Xwl \times tanBe = Lc \times \delta l \times tanBe$$

$$\Delta Zwl = Lc \times \gamma$$

This yields

$$\Delta Xwl = 2.29$$

$$\Delta Ywl = 0.61$$

$$\Delta Zwl = 1.92$$

(The Be angle on the axis plane is 15°). From these coordinates and Fig. 6, an angle formed by the X-axis and OA is calculated to be about 40°. Equations for obtaining x' and the Be angle on each plane are as follows:

$$x' = OA\cos(40 + \alpha)$$

$$Be = \tan^{-1}(\Delta Ywl/x')$$

Values on each plane are as follows:
[Table 1]

Table 1 Angles Formed by Axis Plane and Calculation Results

|  | $\alpha$ (degree) | x' (mm) | $\Delta Y_{wl}$ (mm) | Be (degree) |
|---|---|---|---|---|
| Frankfort Plane | 7.37 | 2.02392 | 0.61578 | 16.9224 |
| Camper Plane Camper | -9.15 | 2.56610 | 0.61578 | 13.4939 |
| Camper Plane Gysi | -4.39 | 2.43016 | 0.61578 | 14.3188 |
| Axis-Orbital Plane McCollum | 9.70 | 1.03365 | 0.61578 | 17.6642 |
| Axis-Orbital Plane Stuart | 7.58 | 2.01585 | 0.61578 | 17.0632 |
| Axis-Nose Wing Plane | -10.10 | 2.59062 | 0.61578 | 13.3682 |

As described above, the movement derivation unit 120 can derive an excursive movement including a Bennett movement according to the theoretical Bennett movement reproduction formulae.

[Difference in Angle between Condylar Path with Respect to Each Reference Occlusal Plane and Gutter Inclination]

Some articulators use various reference planes. McHorris has reported that it is clinically preferable that an articular is set to a difference of 5° between the gutter inclination angle and the condylar path inclination angle. A displacement amount when the condyle and gutter translate are examined on the premise of a virtual articulator in the following manner.
[Table 2]

Table 2

| Name (Plane) | Upper Stage: Condition 1 Lower Stage: Condition 2 | Condylar Path Adjustment Value | | Incisal Guide Adjustment Value | |
|---|---|---|---|---|---|
|  |  | Sagittal Condylar Path Inclination (deg) | Bennett Angle (deg) | Sagittal Inclination (deg) | Lateral Wing Angle (deg) |
| Frankfort | red | 33 | 16.922 | 33 | 11.917 |
|  | blue | 48 | 16.922 | 53 | 21.731 |
| Camper (Camper) | red | 16 | 13.494 | 16 | 11.917 |
|  | blue | 31 | 13.494 | 36 | 21.731 |
| Camper (Gysi) | red | 20 | 14.219 | 20 | 11.917 |
|  | blue | 35 | 14.219 | 40 | 21.731 |
| Axis-Orbital (McCollum) | red | 35 | 17.664 | 35 | 11.917 |
|  | blue | 50 | 17.664 | 55 | 21.731 |
| Axis-Orbital (Stuart) | red | 33 | 17.063 | 33 | 11.917 |
|  | blue | 48 | 17.063 | 53 | 21.731 |
| Axis (Guicht) | red | 25 | 15 | 25 | 10 |
|  | blue | 40 | 15 | 45 | 20 |

(continued)

| Name (Plane) | Upper Stage: Condition 1 Lower Stage: Condition 2 | Condylar Path Adjustment Value | | Incisal Guide Adjustment Value | |
|---|---|---|---|---|---|
| | | Sagittal Condylar Path Inclination (deg) | Bennett Angle (deg) | Sagittal Inclination (deg) | Lateral Wing Angle (deg) |
| Axis-Nose Wing | red | 15 | 13.368 | 15 | 11.917 |
| | blue | 30 | 13.368 | 35 | 21.731 |

To obtain the lateral wing angle, a gutter position using the condyle on the axis plane as the origin was calculated using a lateral wing angle value on the axis plane, the calculated value was converted into coordinates on each plane, and the lateral wing angle was calculated using Takayama's theoretical formulae. The lateral wing angle of the molar calculated from Takayama's theoretical formulae and the cusp angle of the molar are different from actual condition 1, and serve as conditions of the retrusive movement (conditions 3 and 4).

The ITH theoretical mandibular movement formulae described above have adopted the horizontal reference plane as the axis plane, and are designed to be applicable to another plane. A change of the horizontal reference plane influences all angles and X-and Z-coordinates on the sagittal plane. It suffices to subtract only the angle $\alpha$ formed by the axis plane from each angle on the sagittal plane. The conversion method for the X- and Z-coordinates will be described below.

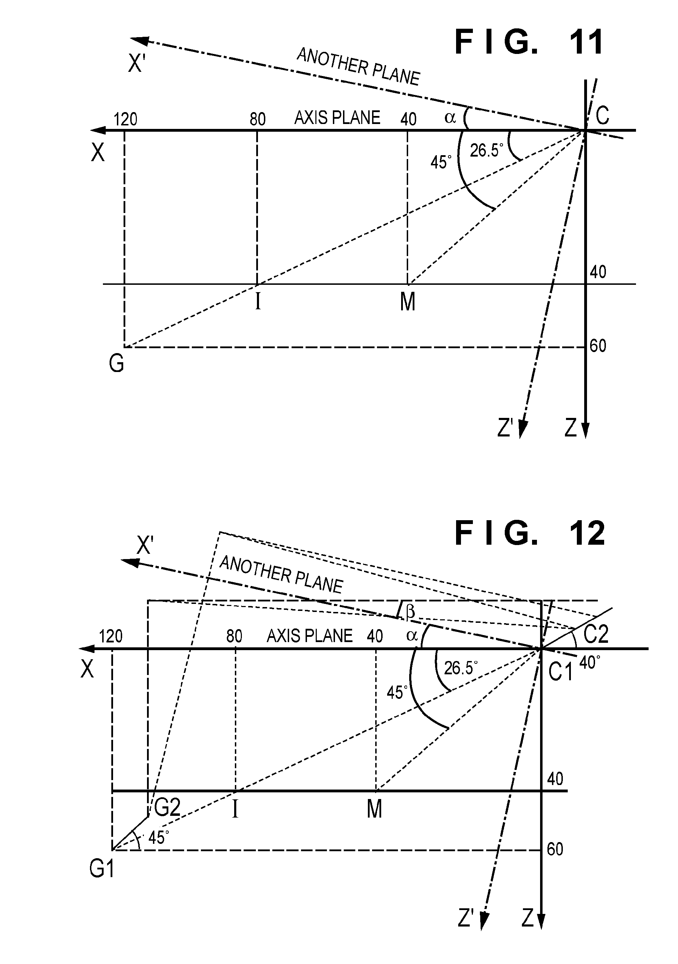

Fig. 11 shows the intersection of the axis plane and another plane. As shown in Fig. 11, the condyle (C) is set as the origin of the axis plane and another plane, and an angle formed by them is set as $\alpha$. The X- and Z-coordinates of the molar (M), incisor (I), and gutter (G) were (40, 40), (80, 40), and (120, 60), respectively. Hence, an angle formed by the axis plane and the straight line CM was 45°, and an angle formed by the axis plane and the straight line CIG was 26.5°. From this, X- and Z-coordinates on another plane are given by

$$X'_M = 40\sqrt{2} \times \cos(45 + \alpha)$$

$$Z'_M = 40\sqrt{2} \times \sin(45 + \alpha)$$

$$X'_I = 40\sqrt{5} \times \cos(26.5 + \alpha)$$

$$Z'_I = 40\sqrt{5} \times \cos(26.5 + \alpha)$$

$$X'_G = 60\sqrt{5} \times \cos(26.5 + \alpha)$$

$$X'_G = 60\sqrt{5} \times \sin(26.5 + \alpha)$$

Coordinates on another plane are as follows:

[Table 3]

| X- and Z-coordinates of Condyle, Incisor, and Gutter on Each Plane | | | | |
|---|---|---|---|---|
| Plane | Angle $\alpha$ [degree] | Molar (M) (X,Z) [mm] | Incisor (I) (X,Z) [mm] | Gutter (G) (X,Z) [mm] |
| Frankfort Plane | 7.37 | (34.5, 44.8) | (74.2, 49.8) | (111.4, 74.7) |
| Camper Plane Camper | -9.15 | (45.8, 33.1) | (85.3, 26.6) | (128.0, 40.0) |
| Camper Plane Gysi | -4.39 | (42.9, 36.8) | (82.8, 33.6) | (124.3, 50.5) |
| Axis-Orbital Plane McCollum | 9.70 | (32.6, 46.1) | (72.1, 52.8) | (108.2, 79.2) |

(continued)

| X- and Z-coordinates of Condyle, Incisor, and Gutter on Each Plane | | | | |
|---|---|---|---|---|
| Plane | Angle α [degree] | Molar (M) (X,Z) [mm] | Incisor (I) (X,Z) [mm] | Gutter (G) (X,Z) [mm] |
| Axis-Orbital Plane Stuart | 7.58 | (34.3, 44.9) | (74.0, 50.1) | (111.1, 75.1) |
| Axis-Nose Wing Plane | -10.10 | (46.4, 32.3) | (85.8, 25.2) | (128.7, 37.8) |
| Axis Plane | 0 | (40, 40) | (80, 40) | (120, 60) |

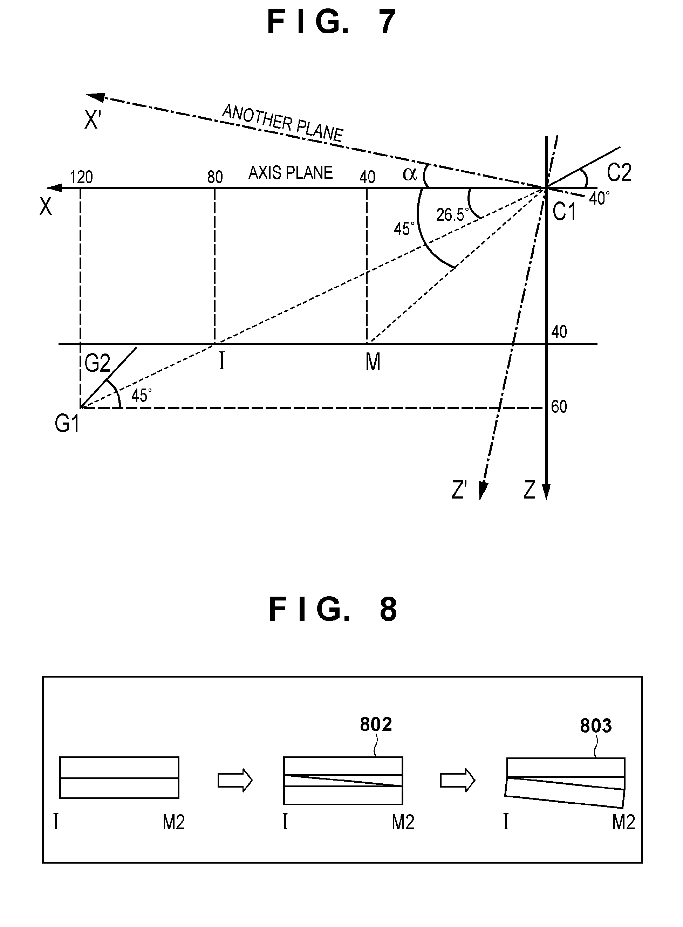

First, displacements of the condyle and gutter before and after translation are checked by converting coordinates on the axis plane into those on another plane. Fig. 7 shows displacements of the gutter and condyle when viewed from the sagittal plane.

As shown in Fig. 7, the incisor of the mandibular was set as the origin, and the line of intersection of the axis plane and another plane was set on the incisal point. C1 is a position of the condyle before translation, G1 is a position of the gutter before translation, and G2 is a point obtained by translation from G1 by -7.1 mm along the X-axis and -7.1 mm along the Z-axis. Then, the condyle translated from C1 by -7.8 mm along the X-axis and -6.2 mm along the Z-axis (this point is C2). By applying the ITH theoretical mandibular movement formulae to another plane, coordinates (X'c1, Z'c1) and (X'g1, Z'g1) on the other plane are obtained. X'c2, Z'c2, X'g2, and Z'g2 are given by

$$X'_{C2} = X'_{C1} - 10 \times \cos(40 - \alpha)$$

$$Z'_{C2} = Z'_{C1} - 10 \times \sin(40 - \alpha)$$

$$X'_{G2} = X'_{G1} - 10 \times \cos(45 - \alpha)$$

$$Z'_{G2} = Z'_{G1} - 10 \times \sin(45 - \alpha)$$

The obtained numerical values are as follows:
[Table 4]

| Plane | Angle α Formed with Axis Plane (degree) | Before Translation of Condyle | | After Translation of Condyle | |
|---|---|---|---|---|---|
| | | X'c1 [mm] | Z'c1 [mm] | X'c2 [mm] | Z'c2 [mm] |
| Frankfort Plane | 7.37 | 0 | 0 | -6.8 | -7.4 |
| Camper Plane C | -9.15 | 0 | 0 | -8.6 | -5.1 |
| Camper Plane G | -4.39 | 0 | 0 | -8.1 | -5.8 |
| Axis-Orbital Plane M | 9.7 | 0 | 0 | -6.5 | -7.6 |
| Axis-Orbital Plane S | 7.85 | 0 | 0 | -6.7 | -7.4 |
| Axis-Nose Wing Plane | -10.1 | 0 | 0 | -8.7 | -5.0 |

| Plane | Angle α Formed with Axis Plane (degree) | Before Translation of Gutter | | After Translation of Gutter | |
|---|---|---|---|---|---|
| | | X'g1[mm] | Z'g1[mm] | X'g2[mm] | Z'g2[mm] |
| Frankfort Plane | 7.37 | 111.4 | 74.7 | 105.3 | 66.8 |
| Camper Plane C | -9.15 | 128.0 | 40.0 | 119.9 | 34.1 |

(continued)

| Plane | Angle α Formed with Axis Plane (degree) | Before Translation of Gutter | | After Translation of Gutter | |
|---|---|---|---|---|---|
| | | X'g1[mm] | Z'g1[mm] | X'g2[mm] | Z'g2[mm] |
| Camper Plane G | -4.39 | 124.3 | 50.5 | 116.7 | 44.0 |
| Axis-Orbital Plane M | 9.7 | 108.2 | 79.2 | 102.4 | 71.0 |
| Axis-Orbital Plane S | 7.85 | 111.1 | 75.1 | 105.1 | 67.1 |
| Axis-Nose Wing Plane | -10.1 | 128.7 | 37.8 | 120.5 | 32.1 |

By calculating $X'_2 - X'_1$ and $Z'_2 - Z'_1$ based on the above results, displacements on each reference plane are obtained as follows.

β on each plane in Fig. 12 is calculated based on the above results. Fig. 12 shows displacements of the condyle and gutter when viewed from the sagittal plane. In Fig. 12, G'1 is the intersection point of a line drawn from G2 parallelly to the Z-axis and a line drawn from C2 parallelly to the X-axis. G'2 is a point translated from G'1 by the same distance as the Z component of G2 from G1. Then, β is given by

[Mathematical 1]

$$\beta = \tan^{-1}\left(\frac{(Z_{G1} - Z_{G2}) - (Z_{C1} - Z_{C2})}{X_{G2} - X_{C2}}\right)$$

For another plane, β is similarly given by

[Mathematical 2]

$$\beta = \tan^{-1}\left(\frac{(Z'_{G1} - Z'_{G2}) - (Z'_{C1} - Z'_{C2})}{X'_{G2} - X'_{C2}}\right)$$

β obtained for each plane are as follows:

[Table 5]

| Plane | α (degree) | β (degree) |
|---|---|---|
| Frankfort Plane | 7.37 | 0.287 |
| Camper Plane Camper | -9.15 | 0.325 |
| Camper Plane Gysi | -4.39 | 0.315 |
| Axis-Orbital Plane McCollum | 9.70 | 0.281 |
| Axis-Orbital Plane Stuart | 7.58 | 0.285 |
| Axis-Nose Wing Plane | -10.10 | 0.327 |
| Axis Plane | 0 | 0.427 |

[Before Application of ITH Theoretical Mandibular Movement Formulae to Another Plane]

In applying the ITH theoretical mandibular movement formulae to another plane, all angles including the sagittal plane angle and Bennett angle need to be considered once and calculated. Calculation results when these angles are not considered and those when these angles are considered will be described below. Note that the X- and Z-coordinates of the condyle, incisor, and gutter on each plane are as described above. (Even if the reference plane changes, the numerical value of the Y-coordinate remains unchanged.) The sagittal plane angle is converted again into an angle on the axis plane for the purpose of comparison.

When the plane changes, the X- and Z-coordinates change, but the Y-coordinate does not change. Thus, all values such as the sagittal plane, frontal plane, horizontal plane angle, and Bennett angle on each plane change. When solving the ITH theoretical mandibular movement formulae on each plane, the sagittal plane angles ($\Omega$cp, $\Omega$ip, $\Omega$gp, and $\Omega$cl), frontal plane angle ($\Phi$il), and Bennett angle (Be) need to be calculated with numerical values suited to each plane. The above values are those on the axis plane. To apply the ITH theoretical mandibular movement formulae to another plane, it is necessary to perform the following calculations and use the resultant values.

As for the sagittal plane angle, a sagittal plane angle ($\Omega$') on another plane is obtained by adding the angle $\alpha$ formed by the axis plane and this plane to a sagittal plane angle ($\Omega$) on the axis plane. As for the frontal plane angle, to convert the frontal lateral incisal guide inclination $\Phi$il into a value suited to another plane, the coordinates of the incisor after lateral movement on the axis plane are obtained first. Then, these values are converted into coordinates on another plane to obtain $\Delta$Zil and $\Delta$Yil, and $\Phi$il on each plane is obtained from these values. The Bennett angle will be described separately. Values in conditions 1 and 2 are as follows.

[Table 6]

| Values in Conditions 1 and 2 | | | | | |
|---|---|---|---|---|---|
| Unit ° | Sagittal Protrusive Condylar Path Inclination $\Omega$cp | Sagittal Protrusive Incisal Path inclination $\Omega$ip | Sagittal Protrusive Incisal Guide Guide Inclination $\Omega$gp | Sagittal Lateral Condylar Path Inclination $\Omega$cl | Frontal Lateral Incisal Path Inclination $\Phi$io |
| Condition 1 | 25 | 25 | 25 | 25 | 30 |
| Condition 2 | 40 | 45 | 45 | 40 | 30 |

[Table 7]

| Ωmp, Φmw, Φmnw, and Ωgmp In Case in Which Angles Are Considered in Condition 1 | | | | | | | |
|---|---|---|---|---|---|---|---|
| Plane | Angle $\alpha$ [degree] | Molar/Sagittal Protrusive Cusp Path Inclination $\Omega$mp | | Molar/Working Side Frontal Lateral Cusp Path Inclination $\Phi$mw | Molar/Nonworking Side Frontal Lateral Cusp Path Inclination $\Phi$mnw | Molar/Sagittal Protrusive Cusp Path Inclination $\Omega$gmp (Gutter Guide) | |
| | | Each Plane | Axis Plane | | | Each Plane | Axis Plane |
| Frankfort Plane | 7.37 | 32.37 | 25.00 | 16.68 | 27.64 | 37.37 | 25.00 |
| Camper Plane Camper | -9.51 | 15.85 | 25.00 | 15.56 | 19.89 | 15.85 | 25.00 |
| Camper Plane Gysi | -4.39 | 2061 | 25.00 | 15.02 | 21.40 | 20.61 | 25.00 |
| Axis-Orbital Plane Mocollum | 9.70 | 34.70 | 25.00 | 14.40 | 26.21 | 34.70 | 25.00 |
| Axis-Orbital Plane Stuart | 7.85 | 32.85 | 25.00 | 14.41 | 25.56 | 32.85 | 25.00 |
| Axis-Nose Wing Plane | -10.10 | 14.90 | 25.00 | 15.69 | 19.60 | 14.90 | 25.00 |
| Axis Plane | 0 | 25.00 | 25.00 | 14.74 | 22.92 | 25.00 | 25.00 |

[Table 8]

| Ωmp, Φmw, Φmnw, and Ωgmp In Case in Which Angles Are Considered in Condition 2 | | | | | | | |
|---|---|---|---|---|---|---|---|
| Plane | Angle α [degree] | Molar/Sagittal Protrusive Cusp Path Inclination Ωmp | | Molar/Working Side Frontal Lateral Cusp Path Inclination Φmw | Molar/Nonworking Side Frontal Lateral Cusp Path Inclination Φmnw | Molar/Sagittal Protrusive Cusp Path Inclination Ωgmp (Gutter Guide) | |
| | | Each Plane | Axis Plane | | | Each Plane | Axis Plane |
| Frankfort Plane | 7.37 | 50.70 | 43.33 | 16.98 | 33.06 | 49.59 | 42.22 |
| Camper Plane Camper | -9.51 | 34.17 | 43.32 | 18.09 | 27.86 | 33.07 | 42.22 |
| Camper Plane Gysi | -4.39 | 38.94 | 43.33 | 17.54 | 29.24 | 37.83 | 42.22 |
| Axis-Orbital Plane Mocollum | 9.70 | 53.02 | 43.32 | 16.98 | 33.84 | 51.91 | 42.21 |
| Axis-Orbital Plane Stuart | 7.85 | 51.19 | 43.34 | 16.98 | 33.21 | 50.07 | 42.22 |
| Axis-Nose Wing Plane | -10.10 | 33.23 | 43.33 | 18.23 | 27.59 | 32.12 | 42.22 |
| Axis Plane | 0 | 43.33 | 43.33 | 17.27 | 30.70 | 42.22 | 42.22 |

[Table 9]

| Φgmw and Φgmnw In Case in Which Angles Are Considered in Conditions 1 and 2 | | | | |
|---|---|---|---|---|
| Plane | Molar/Working Side Frontal Lateral Cusp Path Inclination Φgmw (Gutter Guide) | | Molar/Nonworking Side Frontal Lateral Cusp Path Inclination Φgmnw (Gutter Guide) | |
| | Condition 1 | Condition 2 | Condition 1 | Condition 2 |
| Frankfort Plane | 15.97 | 24.38 | 27.90 | 36.12 |
| Camper Plane Camper | 13.27 | 23.37 | 16.79 | 26.39 |
| Camper Plane Gysi | 14.20 | 23.92 | 19.71 | 29.49 |
| Axis-Orbital | 16.22 | 24.29 | 27.74 | 37.23 |
| Plane Mocollum | | | | |
| Axis-Orbital Plane Stuart | 16.05 | 24.43 | 26.76 | 36.37 |
| Axis-Nose Wing Plane | 13.07 | 23.23 | 16.20 | 25.76 |
| Axis Plane | 10.80 | 23.12 | 15.21 | 31.00 |

[Table 10]

| Plane | Angle α [degree] | Molar/Sagittal Protrusive Cusp Path Inclination Ωmp | | Molar/Working Side Frontal Lateral Cusp Path Inclination Φmw | Molar/Nonworking Side Frontal Lateral Cusp Path Inclination Φmnw | Sagittal Protrusive Cusp Path Inclination Ωgmp (Gutter Guide) | |
|---|---|---|---|---|---|---|---|
| | | Each Plane | Axis Plane | | | Each Plane | Axis Plane |
| Frankfort Plane | 7.37 | 25.00 | 17.63 | 25.90 | 33.59 | 25.00 | 17.63 |
| Camper Plane Camper | -9.51 | 25.00 | 34.15 | 18.78 | 27.00 | 25.00 | 34.15 |
| Camper Plane Gysi | -4.39 | 25.00 | 29.39 | 20.84 | 28.88 | 25.00 | 29.39 |
| Axis-Orbital Plane Mocollum | 9.70 | 25.00 | 15.30 | 26.83 | 34.49 | 25.00 | 15.30 |
| Axis-Orbital Plane Stuart | 7.58 | 25.00 | 17.15 | 25.98 | 33.66 | 25.00 | 17.15 |
| Axis-Nose Wing Plane | -10.10 | 25.00 | 35.10 | 18.35 | 26.61 | 25.00 | 35.10 |
| Axis Plane | 0 | 25.00 | 25.00 | 14.74 | 22.92 | 25.00 | 25.00 |

*Ωmp, Φmw, Φmnw, and Ωgmp In Case in Which Angles Are Not Considered in Condition 1*

[Table 11]

| Plane | Angle α [degree] | Molar/Sagittal Protrusive Cusp Path Inclination Ωmp | | Molar/Working Side Frontal Lateral Cusp Path Inclination Φmw | Molar/Nonworking Side Frontal Lateral Cusp Path Inclination Φmnw | Sagittal Protrusive Cusp Path Inclination Ωgmp (Gutter Guide) | |
|---|---|---|---|---|---|---|---|
| | | Each | Axis Plane | | | Each Plane | Axis Plane |
| Frankfort Plane | 7.37 | 43.18 | 35.81 | 24.10 | 37.83 | 42.11 | 34.74 |
| Camper Plane Camper | -9.51 | 43.54 | 52.69 | 20.73 | 34.86 | 42.36 | 51.51 |
| Camper Plane Gysi | -4.39 | 43.43 | 47.82 | 21.30 | 35.35 | 42.28 | 46.67 |
| Axis-Orbital Plane Mocollum | 9.70 | 43.13 | 33.43 | 22.17 | 36.16 | 42.08 | 32.38 |
| Axis-Orbital Plane Stuart | 7.58 | 43.17 | 35.32 | 22.08 | 36.07 | 42.11 | 34.26 |
| Axis-Nose Wing Plane | -10.10 | 43.56 | 53.66 | 20.59 | 34.75 | 42.38 | 52.48 |

*Ωmp, Φmw, Φmnw, and Ωgmp In Case in Which Angles Are Not Considered in Condition 2*

(continued)

| Plane | Angle α [degree] | Molar/Sagittal Protrusive Cusp Path Inclination Ωmp | | Molar/Working Side Frontal Lateral Cusp Path Inclination Φmw | Molar/Nonworking Side Frontal Lateral Cusp Path Inclination Φmnw | Sagittal Protrusive Cusp Path Inclination Ωgmp (Gutter Guide) | |
|---|---|---|---|---|---|---|---|
| | | Each | Axis Plane | | | Each Plane | Axis Plane |
| Axis Plane | 0 | 43.33 | 43.33 | 17.27 | 30.70 | 42.22 | 42.22 |

*Ωmp, Φmw, Φmnw, and Ωgmp In Case in Which Angles Are Not Considered in Condition 2*

[Table 12]

| Plane | Molar/Working Side Frontal | | Molar/Nonworking Side Frontal | |
|---|---|---|---|---|
| | Lateral Cusp Path Inclination Φgmw (Gutter Guide) | | Lateral Cusp Path Inclination Φgmnw (Gutter Guide) | |
| | Condition 1 | Condition 2 | Condition 1 | Condition 2 |
| Frankfort Plane | 13.57 | 22.70 | 22.69 | 37.24 |
| Camper Plane Camper | 14.22 | 25.76 | 22.70 | 38.47 |
| Camper Plane Gysi | 14.01 | 24.83 | 22.66 | 38.06 |
| Axis-Orbital Plane Mocollum | 13.50 | 22.31 | 22.72 | 37.13 |
| Axis-Orbital Plane Stuart | 13.56 | 22.67 | 22.69 | 37.24 |
| Axis-Nose Wing Plane | 14.27 | 25.96 | 22.71 | 38.56 |
| Axis Plane | 10.80 | 23.12 | 15.21 | 31.00 |

*Φgmw and Φgmnw In Case in Which Angles Are Not Considered in Conditions 1 and 2*

[Extraction in Angle Class I Crowding]

As described in papers about extraction and non-extraction cases in Angle Class I crowding, an actual relationship of a U1-L1 angle of 47° with the Frankfort Plane will be enumerated below.

The positional relationship between the incisal pole and gutter table of a Twin Hoby articulator is reproduced anteriorly by 40 mm from mandibular incisors and vertically downward by 20 mm, and a protrusive distance obtained by drawing a perpendicular from the condyle center is 120 mm. Since the face distance is set to 80 mm in Takayama's theoretical mandibular movement formulae, a 40-mm interposition needs to be reproduced in the articulator. Assuming that the height of the upper and lower arches of an actual Twin Hoby articulator is 80 mm, the distance for division of upper and lower teeth by a pindex is insufficient in the twin-stage procedure of dividing a model for a manipulation of dividing teeth into anterior teeth and molars. For this reason, Hobo slides the upper arch frame of the articulator upward by 20 mm. This does not cause any problem in calculation of the theoretical movement formulae. More specifically, an articulator in which the position of the condyle center is standardized at 80 mm from the incisal path is fabricated. A protrusive reference point of 43 mm reproduces the edge of the maxillary right central incisor, so the maxillary occlusal plane is reproduced downward by 2.15°. However, since the occlusal plane is generally based on the mandibular dental arch, an average angle difference of about 3 mm between overbite and overjet needs to be taken into consideration. When maxillary central incisors protrude from mandibular central incisors by 3 mm (this corresponds to a condyle translation distance of 3 mm in the theoretical formulae), an angle at 83 mm is 2.07°. The angle is 2.15° for mandibular central incisors, which is reproduced as an original occlusal plane in the anterior segment. Thus, there is a difference of about 2.1° = (2°). From this, an angle at the incisal path is a value obtained when the virtual occlusal plane is calculated by 7.37 - 2.07 (2.15) = 5.3° (5.22°). Assuming that this value represents a virtual occlusal plane, numerical values which are said to represent each horizontal reference plane, and the value of about 2° become important for results to be described later.

The incisal guide angle with respect to the Frankfort plane in the preceding Ext group falls within the range of 46.85° = 47°. The results of papers about Angle Class I crowding indicate that the difference of 2° in the anterior segment leads to 47° in the Frankfort plane on the incisal path and is not influenced by the occlusal plane. Based on this, a numerical value of 45° obtained by subtracting 2° serves as an angle on the virtual occlusal plane. Although this angle may be inconsistent with angles in the above tables, Angle Class I data exhibit that an actual incisal guide angle is free from the influence of the occlusal plane. It is therefore determined that the arithmetic angle of the articulator angle is not erroneous and there is no ground in consideration of numerical calculation according to Takayama's theoretical formulae on the axis plane. Even if the model of the articulator changes, a shift of the upper arch frame of the articulator is almost zero. For this reason, it has been said that a difference of 5° between a condylar path angle proposed by McHorris in the paper and the incisal angle is clinically free from an uncomfortable feeling. All numerical values on various occlusal planes will bring the same results as those of numerical values on the axis plane.

From calculation of the difference between the gutter and the condylar path angle as a shift angle of an articulator with a 120-mm upper arch, a virtual translation of about 10 mm represents that the angle (7.35°) of the Frankfort plane with respect to the axis plane translates by 10 mm similarly on the condylar path angle (40°) of the upper arch frame and translates almost parallelly. More specifically, an angle was calculated even for an occlusal plane reproduced as another reference. Similarly, the incisal guide angle was hardly influenced on a reference occlusal plane used generally (see Science of Occlusion p. 194, Table 8-5). An angle down by 3 mm from the protrusive reference point in Takayama's theoretical mandibular movement formulae is about 2°, and an angle with respect to the Frankfort plane is not influenced by the occlusal plane based on the calculation of the virtual occlusal plane. Thus, if the incisal guide angle is 47°, it can be reproduced as a value of 45° obtained by subtracting 2°. Similarly, the gutter and articulator upper arch are turned upside down by 180° for guidance on the condylar path angle slope. A difference of 5° between the condylar path angle of 40° and the gutter angle of 45° upon sliding the incisal guide angle to the gutter angle for translation on the condylar path by the same distance of 120 mm (McHorris has reported that the difference of 5° between the condylar path angle and the gutter angle provides an occlusion mandibular position clinically free from an uncomfortable feeling) is standardized so that angles with respect to all reference planes are reproduced without any influence of the occlusal plane even if these angles are traced in a Twin Hoby articulator, Zero Hoby articulator, and the like. Even the angle of 5.3° in the anterior segment has the same result of similar virtual translation. In general clinic, all jaw dentitions are adjusted while guiding teeth in a guide range of more than 10 mm in an articulator. From the result that an angle at the incisal guide angle is not influenced by the occlusal plane, an angle obtained by subtracting 2.1°, that is, about 2° mentioned above from the incisal guide angle can be reevaluated as an incisal guide angle on the Frankfort plane. That is, an angle down by 3 mm from the protrusive reference point in Takayama's theoretical mandibular movement formulae is about 2°, and an angle with respect to the Frankfort plane is not influenced by the occlusal plane in calculation of a virtual occlusal plane. Therefore, if the incisal guide angle is 47°, it can be reproduced as a value of 45° obtained by subtracting 2°.

Takayama's theoretical mandibular movement formulae do not clearly describe that the incisal guide angle is 45°. For reference numerical values calculated in the sagittal plane according to the theoretical mandibular movement formulae, the gutter incisal guide angle is 46° (45°), the incisal guide angle is 44° (43° + 2° = 45°), and maxillary anterior teeth are modified downward by 3 mm. Hence, the condylar path angle is 40.5° (40°) (parenthesized numerical values calculated based on Appendix in Science of Occlusion, Quintessence Publishing are articulator numerical values). In calculation according to the basic technique for the condylar neck in Takayama's mandibular movement theory, the incisal guide angle when the gutter angle is 45° and the condylar path angle is 40° is 43°. However, the articulator is designed so that the incisal guide angle is defined to be 45° by correcting the protrusive reference point of 43 mm by 3 mm. The late Dr. Takayama said that a physical difference of about 1° was fuzzy and ambiguous. In other words, this angle should be reproduced by the Twin Hoby articulator. By using the Twin Hoby articulator introduced from the theoretical mandibular movement formulae which have been studied by the author for 20 years or more, the incisal guide angle of 45° specified here exhibits good clinical performances.

As published, the incisal guide angle is not influenced by each reference occlusal plane with respect to the horizontal plane based on calculation from Takayama's theoretical mandibular movement formulae. Treatments for Class I crowding by a preadjusted apparatus indicate that the skeletal system has not changed regardless of extraction or non-extraction of four premolars. However, in extractions, the tooth axes of maxillary and mandibular central incisors are inclined toward the lingual side by treatments. Miyake et al. have reported that the tooth axes of maxillary and mandibular central incisors did not change upon dynamic treatments in both extractions and non-extractions. The U1 to FH angle in extractions by Miyake et al. was 111.7° before treatment, which is smaller than 116.77° in extractions in this study. The angle of the mandibular central incisor was 94.61° before treatment, but decreased to 90.03° by 4.58°, and the condylar incisal angle was approximated to 90°. McHorris has described that the condylar incisal angle is functionally most stable at 90°. Although the tooth axes of maxillary and mandibular artificial teeth slightly decreased, the U1-L1 to FH angle (incisal guide angle) did not change by treatment. However, in the retention period, the U1-L1 to FH angle became 46.9° up by 4.5° from the average value before treatment. As described by McHorris, it is considered that the U1-L1 to FH angle takes a predetermined value because of a functional factor. The difference of 5° between the condylar path angle and the incisal guide angle correlates the incisal guide angle with each reference occlusal plane, which is clinically supported by data by McHorris, providing decisive results (see Ito, "Diagnostic Method Using Twin Hoby Articulator").

[Basic Formulae for Temporomandibular Dysfunction]

As for guidance of teeth of a temporomandibular dysfunction, when the second molar is heightened by 1.5 mm, incisors translate anteriorly by 3 mm and molars translate downward by 3 mm. The influence (of guidance) of heightening of the second molar on the mandibular will be examined. This will provide a criterion for the height (mm) by which the second molar should be heightened when a temporomandibular dysfunction patient is treated by the method of heightening the second molar. Theoretical formulae have been introduced by the following method.

In Fig. 8, upper and lower tooth dentitions when viewed from the sagittal plane are represented by rectangles for simplicity. A 1.5-mm wide splint was inserted into the upper and lower teeth in 802, and a hatched portion is chipped off in 803. The mandibular rotates about the second molar from 802 to 803, and the incisor returns to the original height. Since the molar-incisor interval was 40 mm, the angle θ formed by the upper and lower teeth at the incisal point in 803 was obtained by

$$\theta = \tan^{-1}(Z/40) = \tan^{-1}(1.5/40) = 2.14°$$

From this, the coordinates (X' Z') of an arbitrary point (X, Z) of the mandibular upon translation by the rotation using the second molar as the origin is given by

[Mathematical 3]
$$\begin{pmatrix} X' \\ Z' \end{pmatrix} = \begin{pmatrix} \cos\theta & -\sin\theta \\ \sin\theta & \cos\theta \end{pmatrix} \begin{pmatrix} X \\ Z \end{pmatrix} = \begin{pmatrix} X\times\cos\theta - Z\times\sin\theta \\ X\times\sin\theta + Z\times\cos\theta \end{pmatrix}$$

When the second molar is heightened by 1.5 mm, the incisor translates anteriorly by 3 mm, so equations to be obtained are as follows:

$$X' = X \times \cos\theta - Z \times \sin\theta + 3$$

$$Z' = X \times \sin\theta + Z \times \cos\theta + 1.5$$

Based on this, the coordinates of the incisor and condyle when the second molar is heightened by 1.5 mm are as follows:

[Table 13]

|  | Before Translation (X, Z) | After Translation (X, Z) |
|---|---|---|
| Incisor | (40, 0) | (42.9719, 0.0021) |
| Condyle | (-40, -40) | (38.4700, -36.9729) |

By applying the maxillary model and mandibular model of patient X or parameters representing them to the thus-derived equations, actual mandibular movements of patient X can be derived. For example, as described above, the movement derivation unit 120 can derive an excursive movement according to the theoretical virtual articulator reproduction formulae and theoretical temporomandibular dysfunction reproduction process formulae. POSTUROGRAFIA devices suggested a clue to solve these problems. POSTUGRAFIA diagnoses the relevance between a plurality of elements supporting the balance of the human, and considers Retinianas, sensory elements, oculomotor elements Propioceptivas and Oculomotrices, and the like. The human can maintain his posture in a given environment because the sensory receptors of the body sense an external situation. The human cannot maintain his posture if he cannot understand an external environment. The ocular movement Oculomotricidad checks the relevance with the vestibular labyrinth from the posture and decides the retinal position. For the lower body, the antero-posterior, up-and-down, and right-and-left relationships "exocaptore cefalicos" of the head are related to each other and involved in the position of the sole (heel) and the like.

The output unit 130 outputs, as output data 190, information representing the excursive movement derived by the movement derivation unit 120. As the output method of the output unit 130, various methods can be employed. For example, the output unit 130 can output a moving image representing an excursive movement between the maxillary and the mandibular. In particular, the output unit 130 may output a moving image representing a protrusive movement or lateral movement while the teeth contact each other. The moving image output from the output unit 130 may represent a movement in the protrusive movement segment or one in the retrusive movement segment.

Information output from the output unit 130 is not limited to the moving image, and may output a still image complying with the excursive movement derived by the movement derivation unit 120. An image generated by the output unit 130 may be a two-dimensional image or three-dimensional image. The output unit 130 can output image data by various methods. For example, the image output unit 130 can display image data via a display (not shown). The image output unit 130 may store image data in a storage medium via an input/output apparatus (not shown). When the acquisition unit 110 acquires data from an external apparatus, the image output unit 130 may transmit image data to the external apparatus.

Information output from the output unit 130 may be parameters representing the property of the excursive movement derived by the movement derivation unit 120. As these parameters, for example, parameters used in Hobo S, Takayama H: Oral Rehabilitation clinical determination of Occlusion, 1997. Quintessence Publishing Co., Inc. can be used. In this case, the movement derivation unit 120 may derive not the mandibular movement (excursive movement) itself, but parameters representing an actual mandibular movement of patient X.

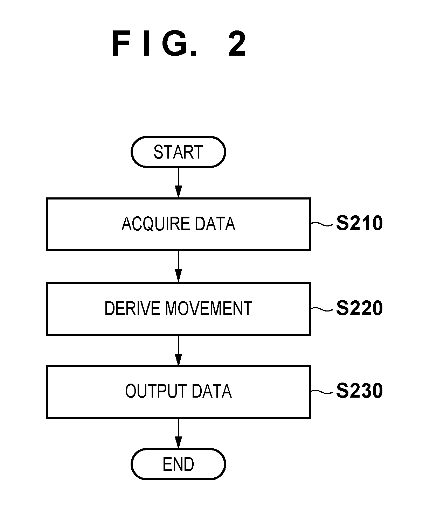

Next, processing to be performed by the information processing apparatus 100 according to the embodiment will be explained with reference to Fig. 2. Fig. 2 is a flowchart showing processing to be performed by the information processing apparatus 100.

In step S210, the acquisition unit 110 acquires the input data 180, as described above. In step S220, the movement derivation unit 120 derives an excursive movement between the maxillary model and the mandibular model, as described above. In step S230, the output unit 130 outputs the output data 190 representing the excursive movement derived by the movement derivation unit 120.

[Modification to First Embodiment]

In the first embodiment, the movement derivation unit 120 derives an excursive movement between the maxillary and the mandibular by using the maxillary model and mandibular model of patient X. However, the maxillary model and mandibular model of patient X need not be directly used. For example, a user such as a dentist can add a manipulation such as deformation to the maxillary model and mandibular model. This manipulation includes, for example, changing the tooth shape and translating respective teeth.

In this case, the maxillary model and mandibular model obtained after the user adds the manipulation may be input as the input data 180 to the information processing apparatus 100. In accordance with an instruction from the user, the acquisition unit 110 may modify the maxillary model and mandibular model represented by the acquired input data 180.

Second Embodiment

An information processing apparatus according to the second embodiment of the present invention will be described below. An information processing apparatus 101 according to the second embodiment can compare an excursive movement between the maxillary and the mandibular with an arbitrary mandibular movement of a patient. Fig. 1B shows the information processing apparatus according to the second embodiment. Similar to the information processing apparatus 100 according to the first embodiment, the information processing apparatus 101 according to the second embodiment includes an acquisition unit 110, movement derivation unit 120, and output unit 130. The acquisition unit 110 and movement derivation unit 120 according to the second embodiment operate similarly to those in the first embodiment. The output unit 130 operates similarly to that in the first embodiment except that it outputs the result of comparison by a comparison unit 150. Thus, a description of the acquisition unit 110, movement derivation unit 120, and output unit 130 will not be repeated.

The information processing apparatus 101 according to the second embodiment of the present invention may include a regeneration unit 140. The regeneration unit 140 can regenerate and reproduce an excursive movement between the maxillary and mandibular of patient X by using the three-dimensional models of the maxillary and mandibular that are acquired by the acquisition unit 110. A mandibular movement can be built and regenerated by various methods. For example, the regeneration unit 140 may acquire, via the acquisition unit 110, a moving image obtained by capturing a mandibular movement of patient X. By analyzing the moving image, an actual mandibular movement of patient X can be derived. The mandibular movement of patient X can be regenerated by moving the three-dimensional models of the maxillary and mandibular in accordance with the derived mandibular movement.

The excursive movement regenerated and reproduced by the regeneration unit 140 may be a reference movement complying with a reference cusp angle. For example, the regeneration unit 140 can regenerate and reproduce a reference movement between the maxillary and the mandibular by applying the reference cusp angle to the above-described theoretical protrusive movement formulae and theoretical retrusive movement formulae.

The cusp angles of different cusp inclined planes can be applied to the protrusive movement segment and retrusive movement segment. Accordingly, a movement in the protrusive movement segment or a movement in the retrusive movement segment can be calculated. Further, different cusp angles can be applied to derivation of a protrusive movement and derivation of a lateral movement. In the lateral movement, different cusp angles can be applied to the working side and nonworking side. The working side is a side on which the back teeth of molars masticate. On the working side, the cusp inclined planes of teeth slide. A side opposite to the working wide is called a nonworking side. A fixed dental arch side out of the right and left sides centered on the condylar paths can also be called a working side. In this case, the translation side of the condyle on the opposite side is called a nonworking side. It can be expressed that the mandibular dental arch translates from the nonworking side to the working side. Cusp angles to be applied need not be the same for all teeth (all molars), and different unique cusp angles can also be applied to respective teeth. In diagnosis in evidence-based dentistry, it is important to consider average elements. The ITH theoretical mandibular movement formulae can derive mandibular movements on these scientific grounds.

A cusp angle to be applied can be decided based on, for example, an average gist. For example, the average value of cusp angles of a plurality of persons can be used. An average value for each attribute (for example, sex or age) of a patient is also usable.

Examples of an applicable cusp angle are as follows. For example, in the protrusive movement segment, the inclination angle of the sagittal plane of the first molar in the protrusive movement can be 43°, the inclination angle of the frontal plane of the working side in the lateral movement can be 25°, and the inclination angle of the frontal plane of the nonworking side in the lateral movement can be 34°. The inclination angle of the sagittal plane of the second molar in the protrusive movement can be 43°, the inclination angle of the frontal plane of the working side in the lateral movement can be 25°, and the inclination angle of the frontal plane of the nonworking side in the lateral movement can be 35°. For example, in the retrusive movement segment, the inclination angle of the sagittal plane of the maxillary second molar in the protrusive movement can be 47°, and the inclination angle of the sagittal plane in the lateral movement can be 40°. An angle for the occlusal form of one tooth can also be independently calculated from the ITH theoretical formulae.

The excursive movement regenerated by the regeneration unit 140 is compared with an excursive movement derived by the movement derivation unit 120. Thus, the excursive movement of the jaw of patient X, which is equivalent to a reference excursive movement derived by the movement derivation unit 120, is preferably regenerated and reproduced. That is, the excursive movement derived by the movement derivation unit 120 and that derived by the regeneration unit 140 are preferably movements of the same type. Movements of the same type can be, for example, movements in almost the same direction or movements in almost the same segment. For example, when the movement derivation unit 120 derives a movement in the protrusive movement segment, the regeneration unit 140 preferably regenerates a movement in the protrusive movement segment. When the movement derivation unit 120 derives a lateral movement, the regeneration unit 120 preferably regenerates and reproduces a lateral movement.

The regeneration unit 140 may acquire an instruction about a movement between the maxillary and the mandibular from a user such as a dentist. The user can give an arbitrary instruction indicating the mandibular movement of a patient. For example, the regeneration unit 140 may display, to the user, the three-dimensional models of the maxillary and mandibular that are acquired by the acquisition unit 110. While observing the displayed three-dimensional models, the user can freely move the three-dimensional models of the maxillary and mandibular. In this manner, the user can reproduce an excursive movement between the maxillary and mandibular of patient X. By using the ITH theoretical mandibular movement formulae, the angle of the cusp inclined plane of each tooth can be set. That is, a better condylar neck environment can be reproduced by setting cusp angles for various mandibular movements. It is considered that the thus-regenerated movement exceeds the degree of freedom in a reference movement based on average data. This is the reason why the average value can serve as clinical evidence. An angle for the occlusal form of one tooth can also be independently calculated from the ITH theoretical formulae.

The information processing apparatus 101 according to the second embodiment further includes the comparison unit 150. The comparison unit 150 can compare the excursive movement derived by the movement derivation unit 120 with a reference movement between the maxillary and the mandibular. The reference movement may be, for example, an excursive movement set in advance by the user. When the information processing apparatus 101 includes the regeneration unit 140, an excursive movement regenerated and reproduced by the regeneration unit 140 may be used as the reference movement. That is, the comparison unit 150 may compare the excursive movement derived by the movement derivation unit 120 with the excursive movement regenerated and reproduced by the regeneration unit 140. A case in which the comparison unit 150 compares the excursive movement derived by the movement derivation unit 120 with the excursive movement regenerated and reproduced by the regeneration unit 140 will be explained. However, the following description will also apply to a case in which the comparison unit 150 compares the excursive movement derived by the movement derivation unit 120 with a preset excursive movement. The comparison can be performed by various methods. For example, the translation distances of movements may be compared, or the directions of movements may be compared. In this case, whether movements coincide with each other may be obtained as a comparison result, or the degree at which movements differ from each other may be obtained as a comparison result. Especially, for each of the protrusive movement segment and retrusive movement segment, the comparison unit 150 preferably compares an excursive movement derived by the movement derivation unit 120 with a preset excursive movement or an excursive movement regenerated and reproduced by the regeneration unit 140. Further, for each of the protrusive movement and lateral movement, the comparison unit 150 preferably compares an excursive movement derived by the movement derivation unit 120 with a preset excursive movement or an excursive movement regenerated and reproduced by the regeneration unit 140.

For the contact state of the inclined planes of one maxillary tooth and one mandibular tooth, movements can also be compared based on a procedure to delete or build the contact portion of each overlapping tooth when the mandibular dental arch itself moves according to the theoretical formulae. For example, for each of the excursive movement derived by the movement derivation unit 120 and the excursive movement regenerated by the regeneration unit 140, whether respective teeth contact each other is determined. Along with the movement, teeth come into contact with each other and move apart from each other. One or both of the order in which teeth come into contact with each other and the order in which they move apart from each other may be determined. If these orders match each other between the excursive movement derived by the movement derivation unit 120 and the excursive movement regenerated and reproduced by the regeneration unit 140, information representing that the orders match each other can be output. If these orders are different, information representing that the orders are different can be output, and information representing teeth for which the orders are different may be output.

The above-described tooth contact state evaluation can also be performed using the ITH theoretical mandibular movement formulae described in the first embodiment. The regeneration unit 140 may compare movements by using a well-known comparison means for the mandibular movement. Further, the comparison unit 150 may cause the output unit 130 to output both the excursive movement derived by the movement derivation unit 120 and the excursive movement regenerated by the regeneration unit 140. In this case, the user can compare the two excursive movements.

According to the second embodiment, a reference mandibular movement complying with the theoretical formulae and the mandibular movement of a patient can be compared. In this fashion, the difference between the mandibular movement of the patient and the reference mandibular movement can be determined. According to the second embodiment, information from data of each individual and a reference value expressed by an average value serving as evidence can also be compared. By using the average value as the reference value, evaluation information for guiding the teeth of a patient to a normal situation and environment each individual should originally have can be provided. (reference: Hidefumi Ito, Toshio Takayama, Science of Occlusion, Vol. 24, No. 1, p. 81, 2004).

[Modification to Second Embodiment]

When the movement derivation unit 120 derives not a mandibular movement itself but a parameter representing an actual mandibular movement of patient X, the comparison unit 150 may compare the parameter derived by the movement derivation unit 120 with a reference value. The reference value may be decided in advance based on an average gist. More specifically, the average value of parameters which are obtained from mandibular movement data of a plurality of persons measured clinically and represent mandibular movements can be used as the reference value. In particular, the reference value is preferably a parameter representing a mandibular movement complying with a reference (average) cusp angle. The reference value may be a value decided in advance by the user as a parameter representing an ideal movement.

The reference value may be a value set in correspondence with the attribute (for example, sex or age) of a patient. For example, the reference value may be the average value of parameters representing mandibular movements for each attribute (for example, sex or age) of a patient. In this case, the acquisition unit 110 may acquire a patient attribute as part of the input data 180, and the comparison unit 150 may acquire a reference value corresponding to the patient attribute acquired by the acquisition unit 110.

In this modification, the comparison unit 150 acquires the reference value. The reference value may be stored in, for example, the regeneration unit 140. The regeneration unit 140 may output, to the comparison unit 150, a parameter representing an average mandibular movement, instead of regenerating the average mandibular movement. The comparison unit 150 may acquire the reference value from the user.

The comparison unit 150 outputs the result of comparison between the parameter derived by the movement derivation unit 120 and the reference value. For example, the comparison unit 150 may output the difference between the parameter derived by the movement derivation unit 120 and the reference value. Alternatively, the comparison unit 150 may compare, with a predetermined threshold, the difference between the parameter derived by the movement derivation unit 120 and the reference value. In this case, the comparison unit 150 may output information representing whether the difference is larger than the predetermined threshold, or the difference is smaller than the predetermined threshold, that is, almost zero.

When the movement derivation unit 120 derives a plurality of parameters, the comparison unit 150 may compare the respective parameters with corresponding reference values. In this case, the comparison unit 150 may output information representing a parameter which deviates from the reference value. Whether a given parameter deviates from the reference value can be determined by comparing the difference between the parameter and the reference value with a predetermined threshold.

Similar to the second embodiment, for each of the protrusive movement segment and retrusive movement segment, the comparison unit 150 preferably compares a parameter derived by the movement derivation unit 120 with a reference value. Further, for each of the protrusive movement and lateral movement, the comparison unit 150 preferably compares a parameter derived by the movement derivation unit 120 with a reference value. Different reference values may be set for the protrusive movement segment and retrusive movement segment, or different reference values may be set for the protrusive movement and lateral movement. In the lateral movement, parameters representing mandibular movements may be independently obtained for the working side and nonworking side. In this case, different reference values may be set for the working side and nonworking side, and respective parameters may be compared with corresponding reference values.

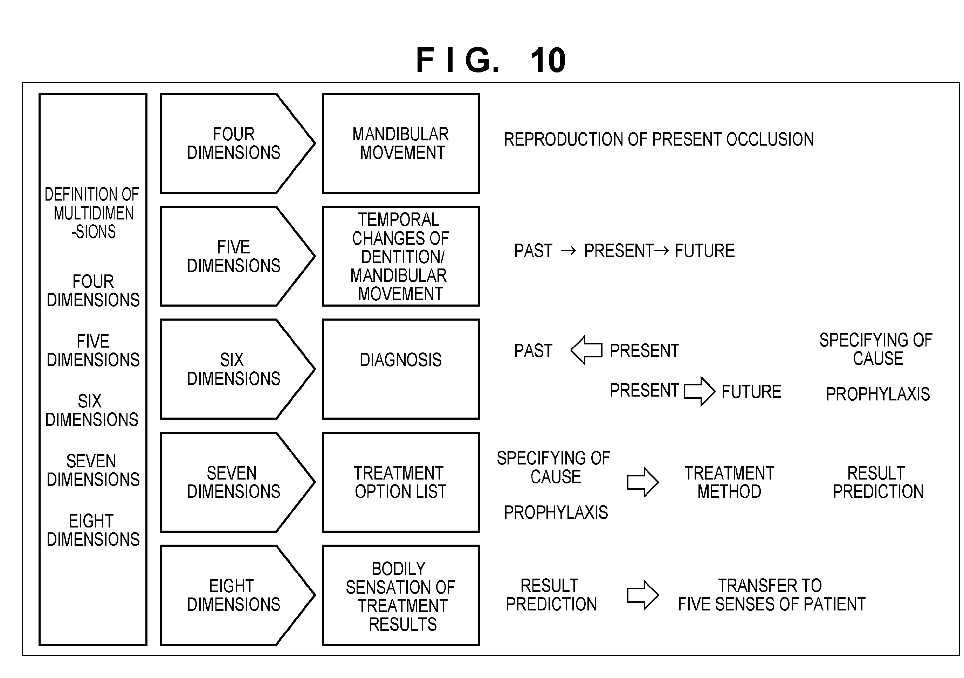

By comparison, an action to determine past, present, and future treatment plans can be included. The program which generally schemes the theoretical formulae defined in claims can be interlocked with systems of all other manufacturers. Also, an information processing apparatus, information processing method, and program capable of increasing the number of dimensions from 4D by adding conditions one by one can be implemented. Fig. 10 shows the definition of multidimensions. The 4D concept allows reproducing a present occlusion by analyzing personal data of each patient based on even the ITH theoretical mandibular movement formulae. 5D allows reproducing temporal changes in the past, present, and future and comprehensively determining a functional occlusion. 6D allows specifying a cause by which a present situation has proceeded through a past process, and appropriately diagnosing a prophylaxis from the present to the future. 7D allows specifying a cause, determining a prophylaxis and treatment method, and predicting the result. 8D provides an action for transfer to sensory receptors, which are the five senses of a patient himself, based on the predicted result. A diagnostic action for treatment is adopted to determine a treatment plan. Although there is a 3Shape device used medically, the device here belongs to the category of dental sensory receptors.

In other words, the technique described in the embodiment can implement a five-dimensional function of reproducing temporal changes of the excursive movement in the past, present, and future, a six-dimensional function of specifying a cause representing how a situation has proceeded from the past up to the present, and diagnosing a prophylaxis from the present to the future, a seven-dimensional function of presenting a treatment method in accordance with the specified cause and the prophylaxis, and predicting the result of the treatment method, and an eight-dimensional function of presenting a method of transfer to sensory receptors, which are the five senses of a patient himself, in accordance with the predicted result. These functions can be implemented by the ITH generally schemed theoretical mandibulofacial movement formulae as described above or a program including the theoretical formulae.

By reevaluating Takayama's theoretical mandibular movement formulae, errors have been presented. By examining the theoretical retrusive movement formulae, the ITH theoretical mandibular movement formulae have been derived. In future, in the fields of general dentistry, orthodontic dentistry, and the like, treatment procedures can be plainly explained using a method of mounting maxillary and mandibular dentition models in an articulator to make a diagnosis, and a computer-based image system (3D/4D) including the condylar neck segment. This will contribute to further establishment of evidence-based medicine. Recent CAD/CAM equipments available from manufactures around the world are achieving accuracies of scanning and the like as close as possible to dimensional numerical values in the industrial field.

Nowadays, CAD/CAM machines have been branched out from industrial products into the medical field from around the world. At present, companies are aiming at devices which expect mass production (though they target dentists and dental technicians). However, even the manufacturing process of protheses by a certain major company has to relay on the skills of dentists and dental technicians though it seems to try to understand a consistent treatment. The dimensional accuracy has greatly improved, and SIRONA (available from Morita) "DEREC AC" instantaneously reproduces the occlusal form by quantitative analysis from the state of each tooth based on an accurate measurement principle called Biogener (short-wavelength blue LED). A CAD/CAM "3Shape Dental System" available from another company and "COS (Chair-side Oral Scanner)" available from 3M also provide excellent accuracy management as the most advanced devices. However, a situation in which a general dentist treated a restoration can be neither explained nor diagnosed. In short, there is no ultimate diagnosis. Diagnosis and treatment should be an integrated, unified concept.

Under the present circumstances, a general dental treatment is given by a trial and error method. A dentist and patient should have a relationship of equality at the same level on evidence. Diagnosis and treatment should be integrated based on scientific grounds, clinical findings for several ten years, and patient's consent for knowledge level.

Third Embodiment

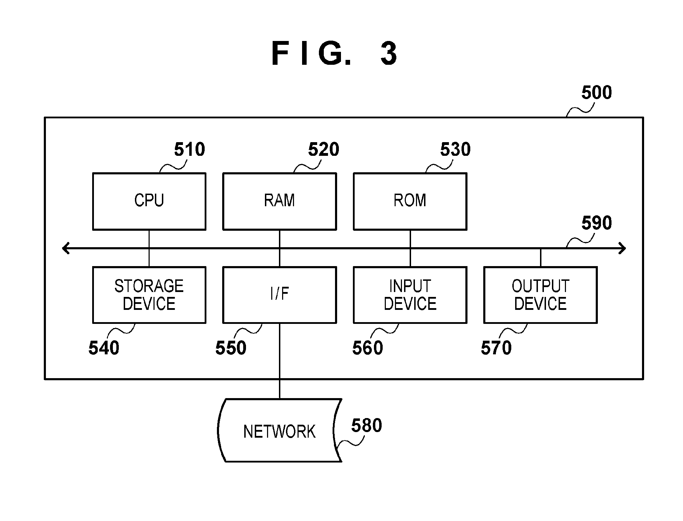

An information processing apparatus according to the third embodiment of the present invention will be described below. In the third embodiment, a computer performs processing according to each of the above-described embodiments. Fig. 3 shows a computer 500 according to the third embodiment. The computer 500 includes a CPU 510, RAM 520, ROM 530, storage device 540, I/F (network InterFace) 550, input device 560, and output device 570. The computer 500 need not include all these elements. The computer 500 may include another element not shown. The computer 500 according to the embodiment may be a home personal computer, a television which displays a television image, a tablet personal computer such as iPad®, or a server.

The CPU 510 controls the overall operation of the computer 500. The CPU 510 can operate in accordance with a program stored in the RAM 520 or ROM 530. The RAM 520 can temporarily store data or a program. The ROM 530 is a nonvolatile memory and can store, for example, programs for operating the computer 500. The storage device 540 can be a device which stores data and programs. The storage device 540 can be a device which reads out stored data and programs from the storage device 540. The storage device 540 includes, for example, a hard disk, CD drive, and DVD drive.

The I/F 550 is an interface for connecting the computer 500 according to the embodiment to a network 580. The computer 500 according to the embodiment can access the network 580 via the I/F 550. The computer 500 according to the embodiment can transmit/receive data to/from another apparatus via the I/F 550 and network 580.

The input device 560 is a device which allows the user to give an instruction to the computer 500. The input device 560 includes, for example, a keyboard and mouse. The output device 570 is a device which presents information to the user by the computer 500. The output device 570 includes a display and printer.

To perform processing according to each of the above-described embodiments by the computer 500, a computer program expresses the functions in each of the above-described embodiments and is executed by the computer 500. More specifically, the computer program is loaded into the RAM 520 via the storage device 540 or I/F 550. For example, the computer program stored in a storage medium such as a CD-ROM can be installed in the storage device 540 serving as a hard disk via the storage device 540 serving as a CD-ROM drive. The computer program on the network 580 can be installed in the storage device 540 serving as a hard disk via the I/F 550. The computer program on the storage device 540 serving as a hard disk can be loaded into the RAM 520. The CPU 510 can control the computer 500 according to the computer program loaded in the RAM 520.

As described above, the processing according to each of the above-described embodiments can be performed using the computer program which implements the functions in each of the above-described embodiments. Also, the processing according to each of the above-described embodiments can be performed by setting, in the computer 500, a computer-readable storage medium storing the computer program. The computer-readable storage medium also falls within the scope of the present invention.

The present invention is not limited to the above-described embodiments, and various changes and modifications can be made without departing from the spirit and scope of the present invention. To apprise the public of the scope of the present invention, the following claims are made.

This application claims the benefit of Japanese Patent Application Nos. 2010-179639, filed August 10, 2010, and 2011-060242, filed March 18, 2011, which are hereby incorporated by reference herein in its entirety.

**Claims**

1. An information processing apparatus **characterized by** comprising:

   acquisition means for acquiring three-dimensional models representing a maxillary and mandibular of a patient; and
   derivation means for deriving an excursive movement between the three-dimensional model representing the maxillary that is acquired by said acquisition means, and the three-dimensional model representing the mandibular that is acquired by said acquisition means,
   wherein said derivation means derives the excursive movement posterior to an intercuspal position.

2. The information processing apparatus according to claim 1, **characterized in that** said derivation means derives the excursive movement posterior to the intercuspal position by using a first calculation method, and derives the excursive movement anterior to the intercuspal position by using a second calculation method different from the first calculation method.

3. The information processing apparatus according to claim 1, **characterized by** further comprising comparison means for comparing the excursive movement derived by said derivation means with a preset movement.

4. The information processing apparatus according to any one of claims 1 to 3, **characterized in that** the excursive movement posterior to the intercuspal position is derived according to equations:

$$\Delta X = -B \times \delta - C \times \Theta + \Delta Ox$$

$$\Delta Y = C \times \gamma - A \times \delta + \Delta Oy$$

$$\Delta Z = A \times \Theta - B \times \gamma + \Delta Oz$$

(where ($\Delta Ox$, $\Delta Oy$, $\Delta Oz$) are three-dimensional displacements of an origin O after a mandibular movement when one point of the mandibular is set as an origin O of a movement coordinate system (x, y, z), $\delta$ is a radian expression of an angle formed by a y-axis of the movement coordinate system with a Y-axis in an X-Y plane after the mandibular movement, $\gamma$ is a radian expression $\gamma$ of an angle formed by the $\gamma$-axis with the $\gamma$-axis in the Y-Z plane after the mandibular movement, $\Theta$ is a radian expression of an angle by which a z-x plane rotates about the y-axis after rotations $\delta$ and $\gamma$, and ($\Delta X$, $\Delta Y$, $\Delta Z$) are three-dimensional displacements of a point at coordinates (A, B, C) on the mandibular).

5. The information processing apparatus according to any one of claims 1 to 4, **characterized in that** said derivation means derives the excursive movement including a Bennett movement according to a theoretical Bennett movement reproduction formula.

6. The information processing apparatus according to any one of claims 1 to 5, **characterized in that** said derivation means derives the excursive movement according to a theoretical virtual articulator reproduction formula and a theoretical temporomandibular dysfunction reproduction process formula.

7. The information processing apparatus according to any one of claims 1 to 6, **characterized in that** the information processing apparatus implements a five-dimensional function of reproducing temporal changes of the excursive movement in the past, present, and future, a six-dimensional function of specifying a cause of a situation which has proceeded from the past up to the present, and diagnosing a prophylaxis from the present to the future, a seven-dimensional function of presenting a treatment method in accordance with the specified cause and the prophylaxis, and predicting the result of the treatment method, and an eight-dimensional function of presenting a method of transfer to sensory receptors, which are five senses of a patient himself, in accordance with the predicted result.

8. An information processing method to be performed by an information processing apparatus, **characterized by** comprising:

an acquisition step of acquiring three-dimensional models representing a maxillary and mandibular of a patient; and
a derivation step of deriving an excursive movement between the three-dimensional model representing the maxillary that is acquired in the acquisition step, and the three-dimensional model representing the mandibular that is acquired in the acquisition step,
wherein in the derivation step, the excursive movement posterior to an intercuspal position is derived.

9. A program for causing a computer to function as each means of an information processing apparatus defined in any one of claims 1 to 7.

10. The program according to claim 9, **characterized in that** the program includes an ITH generally schemed theoretical

mandibulofacial movement formula.

# F I G. 1A

INPUT DATA 180

OUTPUT DATA 190

ACQUISITION UNIT 110 → MOVEMENT DERIVATION UNIT 120 → OUTPUT UNIT 130

100

# F I G. 1B

INPUT DATA 180

OUTPUT DATA 190

ACQUISITION UNIT 110

MOVEMENT DERIVATION UNIT 120

REGENERATION UNIT 140

OUTPUT UNIT 130

COMPARISON UNIT 150

101

# F I G. 2

```
        ┌─────────────┐
        │    START    │
        └─────────────┘
               │
               ▼
   ┌─────────────────────────┐
   │      ACQUIRE DATA       │──── S210
   └─────────────────────────┘
               │
               ▼
   ┌─────────────────────────┐
   │     DERIVE MOVEMENT     │──── S220
   └─────────────────────────┘
               │
               ▼
   ┌─────────────────────────┐
   │       OUTPUT DATA       │──── S230
   └─────────────────────────┘
               │
               ▼
        ┌─────────────┐
        │     END     │
        └─────────────┘
```

# F I G. 3

**500**

**510** **520** **530**

| CPU | RAM | ROM |

**590**

| STORAGE DEVICE | I/F | INPUT DEVICE | OUTPUT DEVICE |

**540** **550** **560** **570**

NETWORK **580**

FIG. 4

# F I G. 5

ANOTHER PLANE

X'

X

α

Y

AXIS PLANE

SAGITTAL PLANE

# F I G. 6

X'

X
Y
Z

ANOTHER PLANE

X'

AXIS PLANE          2.29          α          O

X                                40°

1.92

A

Z'

Z

# F I G. 7

# F I G. 8

**F I G. 9**

TOOTH INFORMATION (FORM, ANGLE, ETC.)

DENTITION INFORMATION (SHAPE, THICKNESS, ETC.)

DENTAL ROOT INFORMATION (FORM, ANGLE, ETC.)

JAWBONE INFORMATION (SHAPE, THICKNESS, ETC.)

DIRECT

IMPRESSION MATERIAL

PLASTER MODEL

SCANN-ING

MANDIBULAR MOVEMENT DIAGNOSTIC IMAGES

DIAGNOSTIC ANALYSIS 3D IMAGES

IT THEORETICAL MANDIBULAR MOVEMENT FORMULAE

5D DIAGNOSTIC IMAGES & DATA

HISTORY IMAGES OF DENTITION AND JAW

FUTURE PREDICTED IMAGES OF DENTITION AND JAW

COMMERCIALIZA-TION

DENTAL TREATMENT DIAGNOSIS SUPPORT MATERIALS

ORTHODONTIC DIAGNOSIS SUPPORT MATERIALS

6D IMAGES & DATA

DATA INTEGRATION ?

MANDIBULAR MOVEMENT REPRODUCTION IMAGES & DATA

CURRENT INTRAORAL MODE

DATA INTEGRATION ?

DATA INTEGRATION ?

IT THEORETICAL MANDIBULAR MOVEMENT FORMULAE

ORTHODONTIC TREATMENT OPTIONS

PROSTHESIS/ PERIODONTAL TREATMENT OPTIONS

OCCLUSION/ PROSTHESIS DIAGNOSTIC THEORIES

DIAGNOSTIC TOOLS FOR CEPHALOMETRIC ANALYSIS, ETC.

VARIOUS ARTICULATOR ANALYSIS THEORIES

# F I G. 10

<table>
<tr><td rowspan="6">DEFINITION OF MULTIDIMEN -SIONS<br><br>FOUR DIMENSIONS<br><br>FIVE DIMENSIONS<br><br>SIX DIMENSIONS<br><br>SEVEN DIMENSIONS<br><br>EIGHT DIMENSIONS</td><td>FOUR DIMENSIONS</td><td>MANDIBULAR MOVEMENT</td><td>REPRODUCTION OF PRESENT OCCLUSION</td></tr>
<tr><td>FIVE DIMENSIONS</td><td>TEMPORAL CHANGES OF DENTITION/ MANDIBULAR MOVEMENT</td><td>PAST → PRESENT→ FUTURE</td></tr>
<tr><td>SIX DIMENSIONS</td><td>DIAGNOSIS</td><td>PAST ⇐ PRESENT     SPECIFYING OF CAUSE<br>PRESENT ⇒ FUTURE    PROPHYLAXIS</td></tr>
<tr><td>SEVEN DIMENSIONS</td><td>TREATMENT OPTION LIST</td><td>SPECIFYING OF CAUSE ⇒ TREATMENT METHOD  RESULT PREDICTION<br>PROPHYLAXIS</td></tr>
<tr><td>EIGHT DIMENSIONS</td><td>BODILY SENSATION OF TREATMENT RESULTS</td><td>RESULT PREDICTION ⇒ TRANSFER TO FIVE SENSES OF PATIENT</td></tr>
</table>

# F I G. 11

# F I G. 12

## INTERNATIONAL SEARCH REPORT

| International application No. |
| --- |
| PCT/JP2011/004252 |

A.  CLASSIFICATION OF SUBJECT MATTER
*A61C19/045*(2006.01)i, *A61C7/00*(2006.01)i, *A61C11/00*(2006.01)i

According to International Patent Classification (IPC) or to both national classification and IPC

B.  FIELDS SEARCHED

Minimum documentation searched (classification system followed by classification symbols)
A61C19/045, A61C7/00, A61C11/00

Documentation searched other than minimum documentation to the extent that such documents are included in the fields searched
Jitsuyo Shinan Koho          1922–1996   Jitsuyo Shinan Toroku Koho   1996–2011
Kokai Jitsuyo Shinan Koho    1971–2011   Toroku Jitsuyo Shinan Koho   1994–2011

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
| --- | --- | --- |
| X<br>Y | JP 2007-37687 A  (Hidefumi ITO),<br>15 February 2007 (15.02.2007),<br>claims 1, 11; paragraphs [0040] to [0054],<br>[0086]<br>(Family: none) | 1-3,7-9<br>4-6,10 |
| Y | Michio HAGA, Toshio TAKAYAMA, Kogogaku, 1st<br>edition, Quintessence Publishing Co., Ltd.,<br>10 January 1995 (10.01.1995), pages 564 to 566 | 4-6,10 |
| A | WO 2008/149221 A1  (ALIGN TECHNOLOGY, INC.),<br>11 December 2008 (11.12.2008),<br>paragraphs [0029], [0061], [0062]<br>& JP 2010-528748 A      & US 2008/0305452 A1<br>& US 2008/0306724 A1     & US 2008/0305453 A1 | 1,7,8 |

☒  Further documents are listed in the continuation of Box C.          ☐  See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>12 October, 2011 (12.10.11) | Date of mailing of the international search report<br>25 October, 2011 (25.10.11) |
| --- | --- |
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2011/004252

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2010-524529 A  (Materialise Dental N.V.), 22 July 2010 (22.07.2010), paragraphs [0014] to [0016], [0025], [0033], [0035] & US 2010/0145898 A1    & WO 2008/128700 A1 | 1,7,8 |
| A | JP 2004-136072 A  (Hidefumi ITO), 13 May 2004 (13.05.2004), paragraphs [0046], [0047] (Family: none) | 1,7 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010506692 A
- JP 2007037687 A
- JP 2010179639 A
- JP 2011060242 A

**Non-patent literature cited in the description**

- **HOBO S ; TAKAYAMA H.** Oral Rehabilitation clinical determination of Occlusion. Quitessence Publishing Co., Inc, 1997
- Science of Occlusion. Quitessence Publishing Co., Inc, 1995
- Clinical Evidence and Prosthodontics. *Journal of Prosthetic Dentistry,* 2002, vol. 46, 476
- **HOBO S ; TAKAYAMA H.** Oral Rehabilitation clinical determination of Occlusion. Quintessence Publishing Co., Inc, 1997
- **HIDEFUMI ITO ; TOSHIO TAKAYAMA.** *Science of Occlusion,* 2004, vol. 24 (1), 81